Europäisches Patentamt

European Patent Office

Office européen des brevets

(19)

(11) **EP 0 969 396 A2**

(12) **EUROPEAN PATENT APPLICATION**

(43) Date of publication:
05.01.2000 Bulletin 2000/01

(51) Int Cl.[7]: **G06F 17/50**

(21) Application number: **99305171.3**

(22) Date of filing: **30.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.07.1998 JP 20113298**
**01.07.1998 JP 20113398**

(71) Applicant: **Kawai, Tadahiko**
**Tokyo (JP)**

(72) Inventor: **Kawai, Tadahiko**
**Tokyo (JP)**

(74) Representative:
**Cross, Rupert Edward Blount et al**
**BOULT WADE TENNANT,**
**27 Furnival Street**
**London EC4A 1PQ (GB)**

(54) **Numerical analyzing method, element analyzing blocks, and processing apparatus for numerical analysis**

(57)  The present invention provides a numerical analyzing method, by which equations of every element of a phenomenon represented by partial differential equations can be solved independently from each other by the direct method or the iteration method without using any collocation method such as the domain decomposition method, the finite difference method or the finite element method.

A defined domain is decomposed in mesh (S1); state vectors in each element of the mesh are approximated by polynomials of finite number of terms with respect to coordinate variables (S2): and then conditions between different undetermined coefficients satisfying given govering equations are obtained. Next equations representing relationships between the undetermined coefficients of each element (element state equations) required for satisfying continuity conditions of state vectors on peripheral boundaries of every element are obtained by the least squares method to obtain a square matrix equation (S4). Further an element matrix at that time is reduced by decomposition (S5), taking the boundary conditions given on the periphery into account, and square matrix equations thus obtained are solved either by the iteration method as it is, in case where they are separated from each other, or by the direct method as a whole (S6). State vectors at arbitrary points are calculated by using calculation results obtained in this way.

EP 0 969 396 A2

**Description**

FIELD OF THE INVENTION

The present invention relates to a method for analyzing phenomena, which can be represented by partial differential equations, and in particular to a method for numerically analyzing linear and non-linear problems by discrete analysis, presupposing use of an electronic computer.

DESCRIPTION OF THE PRIOR ART

Equations govering phenomena in the field of natural science and social science are given, generally, by partial differential equations of functions varying in time and spatially and analysis of boundary values and initial values therefor is a central problem of applied mathematics.

However, before the middle of the present century, even if consideration is restricted to linear partial differential equations, problems, analytical solutions of which could be obtained, were extremely limited. Owing to remarkable progress in electronic computers, practical utilization of numerical analyzing methods such as a finite difference method (FDM), a finite element method (FEM), a boundary element method (BEM), etc. have been progressed and these methods including analysis of non-linear problems have become basic technologies for research and development in scientific and technological fields.

By "Method for analyzing non-linear problems in solid mechanics using a deformable-spring model" (JP-B-Sho 61-10771), filed March 10, 1977 by the present inventor and published March 31, 1986, generalization and utilization in practice of the idea of extremity analysis, which is standardized mainly in the field of framework structure, have been achieved by the aide of the finite element method so that analysis of all problems in deformable mechanics can be carried out and nowadays it is applied not only in the field of the civil engineering and construction industry but also widely in many design and fabrication steps in the industry "by dividing a plurality of objects to be analized in a non-linear problem in deformable mechanics into a plurality of extremely small deformable elements arbitrarily shaped, considering them as an assembly of deformable-spring models linked with each other by springs distributed on boundary interfaces between elements and executing analytical operations of various sorts of non-linear problems in the deformable mechanics including influences of large inelastic deformations and cracks, on the basis of the energy principle, by means of an electronic computer".

Although the finite difference method and the finite element method are brought to perfection as calculation methods so that it can be said that all sorts of non-linear problems can be solved thereby, following basic problems remain unsolved.

(1) Problems on convergence and accuracy of solutions

It can be said that methods for evaluating accuracy and conversion of only linear solutions obtained by the finite difference method and the finite element method are already established. However the methods therefor are fairly complicated and much more research on evaluation of accuracy of non-linear solutions is only in a stage where the first step thereof has been finally taken.

(2) Generalization of the finite element method

The prior art finite element method is a so-called collocation method, because state vectors of element modes are adopted as variables. Therefore it was impossible essentially to take continuity of state vectors at arbitrary points on boundary sides or surfaces of elements into account.

(3) Problems of inelastic analysis by the finite element method

Plastic deformation is essentially a slip deformation and inelastic analysis thereof should be an analizing method, in which discontinuity of displacement can be introduced. By the finite element method supposing continuity of displacement it is extremely difficult to introduce this slip deformation.

In order to solve this problem, the present inventor has proposed a model used exclusively for analyzing limits of rigid bodies (RBSM) by "Method for analyzing non-linear problems in solid mechanics by using a deformable-spring model" (JP-B-Sho 61-10771) described previously. Practical usefulness thereof has been verified in a number of examples of application to metallic constructions, concrete, ground constructions, etc. However, since also this RBSM neglects deformation of elements, it has problems in elastic analysis and it cannot be any element model, which can be used consistently from elasticity to collapse through plasticity.

(4) Finite element analysis of transport phenomena

Since phenomena of transportation and conversion of mass, momentum and energy, so-called transport phenomena, are strongly non-linear due to convective terms, an ultra large scale high speed calculation system is indispensable for precise analysis both by the finite difference method and by the finite element method. Further, in the present state, study of transport phenomena in a multi-component system is almost not initiated.

(5) Problems in present analyzing methods (mainly the finite difference method, the finite element method)

As described previously, both the finite difference method and the finite element method are collocation methods, viewed from a standpoint of numerical analysis, and they have a problem that satisfactory accuracy can be obtained only at limited points for an aimed solution. For example, taking a case where a computer simulation of a global warming problem is effected by the finite difference method as an example, since govering equations thereof are partial differential equations extremely complicated having a three-dimensional non-stational non-linear form, even if there is an extremely small error, when they are integrated in a long period of time, calculations become unstable and diverge. Therefore, in researches and developments, attentions are paid to how to stabilize them for a long period of time in the present calculation procedure and in addition how to solve a greater problem. However, since the starting point thereof is the collocation method, limitation thereof is clear. Nevertheless, heretofore, since no other epoch-making methods can be found, researches and developments are concentrated to the point mentioned above.

Originally state vectors should be continuous throughout on boundary sides or surfaces of elements adjacent to each other, but by the collocation method man cannot help being satisfied by maintaining continuity at representative points thereof. Further, by the finite difference method or the finite element method solutions can be obtained only after having constructed a set of equations of the whole systems. Consequently, for a matrix of super large scale, when calculations are effected in parallel, restrictions on so-called granularity give rise to a big problem.

SUMMARY OF THE INVENTION

Therefore an object of the present invention is to provide a numerical analyzing method, in which equations on each element of a phenomenon represented by partial differential equations can be solved independently from each other by a direct method or by an iteration method, neither using the collocation method as used by the finite difference method and the finite element method nor restricted on granularity, by using an electronic computer.

In order to achieve the above object, the inventor of the present invention has been led to conceive newly an invention relating to the numerical analyzing method for solving a linear or non-linear problem represented by partial differential equations by using an electronic computer on the basis of following considerations.

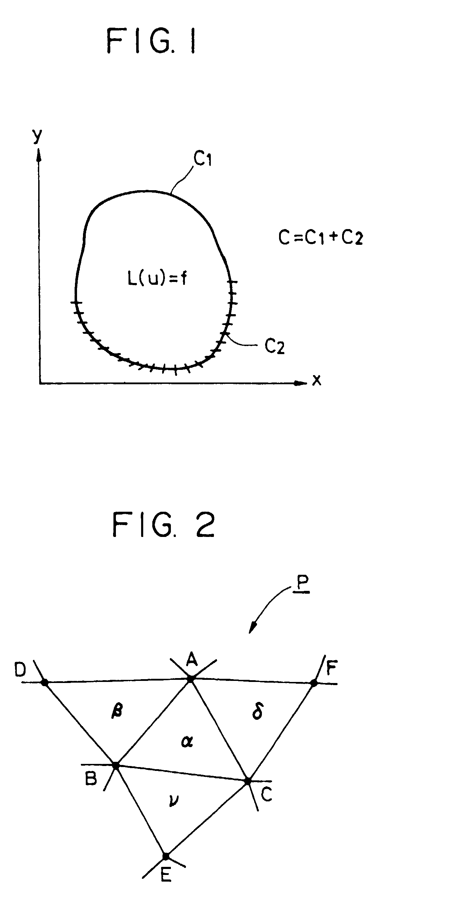

Fig. 1 is a diagram for explaining background of the numerical analyzing method according to the present invention, for which a mixed boundary value problem in a two-dimensional domain is taken as an example.

In Fig. 1, a govering equation for a domain C is supposed to be

$$L (x) = f (x, y) \tag{1}$$

where L is a difference operator for a two-dimensional domain.

Further, if collateral boundary conditions are:
geometrical boundary condition

GEOMETRICAL BOUNDARY CONDITION
$$u = \overline{u}(x, y) \quad : \text{on C1} \tag{2}$$
$$u_i(s) = u_j(s) \tag{2'}$$

natural boundary condition

NATURAL BOUNDARY CONDITION
$$k \left( \frac{\partial u}{\partial n} \right) = g(x, y) \quad : \text{on C2} \tag{3}$$

u(x, y), g(x,y) are known functions, and

$$\left(\frac{\partial u}{\partial n}\right)_i (s) = \left(\frac{\partial u}{\partial n}\right)_j (s) \qquad\qquad (3')$$

where i and j are element numbers, an orthodox method can be represented by:

$$u=u_g+u_p \qquad \text{LINEAR SUPERPOSITION LAW} \qquad\qquad (4)$$

$$L(u_p)=f \qquad \text{SPECIAL SOLUTION} \qquad\qquad (5)$$

$$L(u_g)=0 \qquad \text{GENERAL SOLUTION OF A HOMOGENEOUS EQUATION FORMED BY A VARIABLE}$$

$$\text{SEPARATION METHOD} \qquad\qquad (6)$$

This general solution can be represented generally by a series of functions having an infinite number of undetermined coefficients. Substituting u in the equations (2) and (3) serving as boundary conditions by the u thus formed, the undetermined coefficients should be determined so that they are satisfied throughout on the boundary.

Now it is supposed that the boundary of the domain C is given by:

$$x=x(s), \qquad y=y(s) \qquad\qquad (7)$$

where s indicates a length of arc measured from a certain point.

Substituting Equation (7) for x and y in Equations (2) and (3), expanding the two members with respect to the parameter s, and putting the coefficients in terms of same order of power to be equal to each other, relating equations (simultaneous first order equations) with respect to the infinite number of unknown coefficients can be deduced. In case where these simultaneous first order equations of infinite dimension can be solved, analytical solutions can be obtained. However, in practice, the infinite number of unknown variables is brought to an end at a certain finite number and if a square matrix equation thus obtained can be solved, an approximate solution thereof is obtained. The present invention is devised by enlarging this method as a method for discrete analysis suitable for calculation by means of an electronic computer.

Further, concerning the problems described above on convergence and accuracy of solutions, by the present numerical analyzing method the force method, in which equations are solved by using forces as unknown variables, is possible. Consequently it is possible to determined a lower bound of correct solutions and if a displacement method giving an upper bound thereof is used in common, determination of a range, in which a true solution exists, is relatively easy. In addition, it is also possible to estimate an extent of errors of an approximate solution of a non-linear problem obtained by this method.

Moreover, by the present numerical analyzing method, the prior art concept of nodes is abandoned and continuity conditions of state vectors on boundary sides or surfaces of elements are led to a form of polynomials with respect to a floating coordinate system introduced on the boundary sides or surfaces, in which coefficients of terms of zero order, first order, second order, ... are equal to each other for elements adjacent to each other.

It can be said that such an ideal is identical to that of iso-parametric elements in the prior art finite element method. However, since in the case of the iso-parametric elements the element matrix is constructed step by step by using special functions, it is thought that calculation thereof is much more troublesome than by the present method, in which only power series with respect to floating coordinates newly defined on an boundary is used, so that much labor and calculation time are required.

Moreover, advancing this idea further by a step forward, it is possible to effect generalization of the prior art finite element method without any unreasonable measure by adopting the coefficients of terms of zero order, first order, second order, ... newly as element variable (element parameters).

[Numerical analysis in the field of solid body mechanics]

In the case of solid body mechanics, as deduced from the Hu-Washizu' s principle ("Introduction to Energy Principle" page 114 to 119, by Kyuichiro Washizu (published by Baifukan)), the mixed formulation, in which element displacements and boundary force components accompanied thereby are mixed with various ratios to be used as element variables, is possible and the mixed formulation, which has been heretofore dealt with on the basis of the variational method, from the prior art displacement method to the force method, can be developed more widely, more flexibly and more practically.

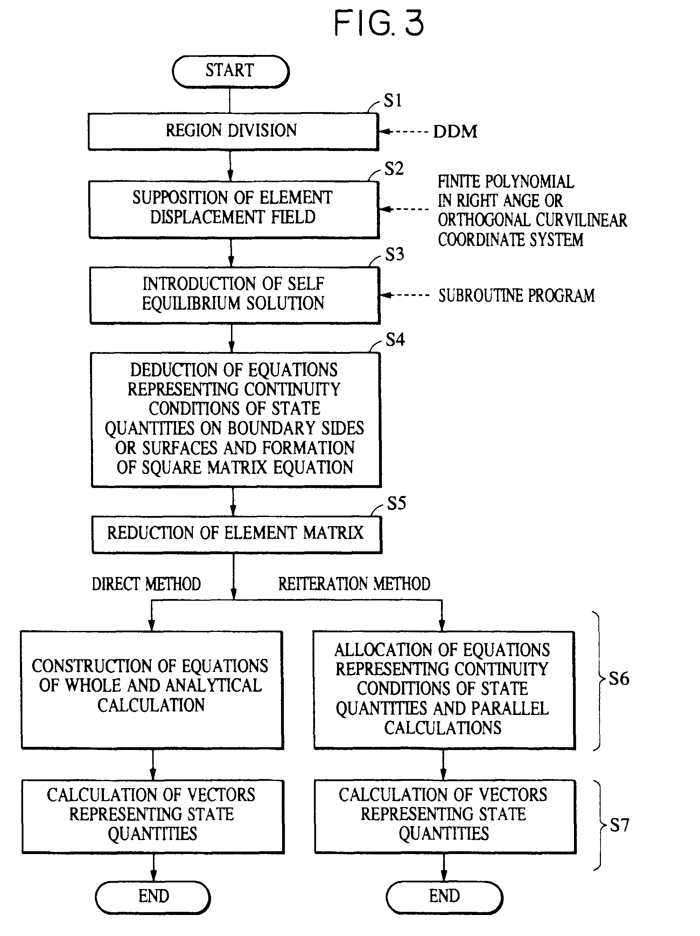

That is, by the approximation method described above approximate solutions have been obtained by the least squares method (more generally speaking MWR (Method of Weighted Residuals)) (refer to Step 4 in Fig. 3). However, in fields such as solid body mechanics, for which the variation principle is established, approximate solutions can be obtained without using the least squares method. Further this method can be applied also to hydrodynamics and electromagnetic dynamics.

At first, a displacement solution $u_i$ of linear solid body mechanics makes potential energy of a system given by a following formula (8) minimum:

$$\pi_P = \iiint_Y [U(u_i) - \bar{F}_i u_i]du - \iint_{j\sigma} \bar{T}_i u_i ds \rightarrow \text{MINIMUM} \qquad (8)$$

Here $U(u_i)$ represents strain energy given by a displacement $u_i$, $\bar{F}_i$ and $\bar{T}_i$ are a body force and a surface traction force, respectively (Sσ, S=Sσ+Su).

$$\sigma_{ij} = d_{ijkl}\varepsilon_{kl}$$
$$\therefore U(\varepsilon_{ij}) = \frac{1}{2}d_{ij}\varepsilon_{ij} = \frac{1}{2}d_{ijkl}\varepsilon_{ij}\varepsilon_{kl} \qquad \Big\} \qquad (9)$$

Collateral conditions are given by:

$$u_{j_i} = \bar{u}_i \text{ or } S_U \qquad (10)$$

In 1953, Professor Hu and Professor Washizu deduced a principle of stationary (Hu-Washizu Principle) of a function πG obtained by generalizing IIp by using Lagrange' s undetermined coefficients $\sigma_{ij}$, $p_i$ independently from each other.

A following equation (11) indicates the function πG.

$$\Pi_G = \iiint_v \Big[ U(\varepsilon_{ij}) - \bar{F}_i u_i - \sigma_{ij}\Big\{\varepsilon_{ij} - \frac{1}{2}(u_{ij} + u_{ji})\Big\}\Big]\,dv$$
$$- \iint_{\sigma} \bar{T}_i u_i\, ds - \iint_{u} P_i(u_i - \bar{u_i})ds \rightarrow \text{STATIONARY} \qquad (1\,1)$$

Here stationary means that displacement takes place with respect to u. Independent functions subjected to variation are $\sigma_{ij}$, $\varepsilon_{ij}$, $u_i$ and $p_i$ and there are no collateral conditions.

From the stationary conditions with respect to $\varepsilon_{ij}$ and Ui in πG in Equation (11)

$$\frac{\partial U(\varepsilon_{kl})}{\partial \varepsilon_{ij}} = \sigma_{ij} : V \quad \text{INNER} \qquad (1\,2)$$

$$P_i = T_i = \sigma_{ij}\, n_j : S\sigma \qquad \text{UPPER} \tag{13}$$

are deduced, where $n_j$ is an outward unit normal vector standing on $S\sigma$. These equations give physical meanings of Lagrange' s undetermined coefficients.

When a formula representing a strain-displacement relationship

$$\varepsilon_{ij} = \frac{1}{2}\left(u_{i,j} + u_{j,i}\right) \tag{14}$$

is introduced into them and $p_i$ is eliminated from equation (11), an equation as described below is obtained:

$$\Pi_\sigma = -\iiint_V \left(\sigma_{ij,j} + \overline{F_i}\right)u_i\,dv + \iint_{S\sigma}\left(T_i - \overline{T_i}\right)u_i\,ds - \iint_{Su}\left(u_i - \overline{u_i}\right)T_i\,ds \to \text{STATIONARY} \tag{15}$$

or

$$\Pi_\sigma = -\iiint_V \left(\sigma_{ij,j} + \overline{F_i}\right)\delta u_i\,dv + \iint_{S\sigma}\left(T_i - \overline{T_i}\right)\delta u_i\,ds - \iint_{Su}\left(u_i - \overline{u_i}\right)\delta T_i\,ds = \sigma \tag{16}$$

where independent variables subjected to variation are $u_j$ and there are no more additional conditions.

In words Equation (15) means "fields of displacements satisfying the formula (14) representing a strain-displacement relationship and the formula (9) representing a force-strain relationship give true solutions, in case where they satisfy following condition formulas:

$$
\left.
\begin{array}{llll}
\text{(a) EQUILIBRIUM CONDITIONS:} & \sigma_{ij,j} + \overline{F_i} = 0 & in\ V \\
\text{(b) DISPLACEMENT BOUDARY CONDITIONS:} & u_i = \overline{u_i} & on\ Su \\
\text{(c) FORCE BOUNDARY CONDITIONS:} & T_i = \overline{T_i} & on\ S\sigma
\end{array}
\right\} \tag{17}
$$

That is, according to the present invention, is numerical analysis in the field of solid body mechanics (and electromagnetic dynamics) it is possible to obtain formulas representing relationships between undetermined coefficients for every element, which are necessary for satisfying continuity conditions of state vectors (displacement, force in the case of solid body mechanics) on boundary peripheries of every element (formula representing element state vector continuity conditions), on the basis of Equation (16).

As clearly seen from Equation (16) representing the variational principle, in analyzing methods in solid body mechanics the mixed formulation, to obtain approximate solutions by using both displacement and force as independent variables, is used heretofore as the main process. Further, presupposing Equations (9), (13) and (14), it is possible to obtain approximate solutions satisfying the variational principle represented by Equation (16), starting both from displacements uj and from force functions $\sigma_{ij}$.

(i) Methods for obtaining solutions, using displacements uj as undetermined functions.

Making a model of a set of finite elements according to the domain decomposition method (DDM), there are following two methods.

Displacement method (DMI)

This method uses element displacement functions satisfying only displacement boundary conditions and since the displacement boundary conditions ((b) of Equation (17)) are satisfied, Equation (16) can be transformed into a following Equation (18):

$$\iiint_v \left(\sigma_{ij,j} + \overline{F_i}\right)\delta u_i\, dv - \iint_{s\sigma}\left(T_i - \overline{T_i}\right)\delta u_i\, ds = 0 \qquad (18)$$

For inner elements the surface integral term in Equation (18) can be given by Equation (19):

$$\iint_{s\sigma ij}\left(T_i - T_j\right)\delta u_i\, ds = 0 \qquad (19)$$

where Tj represents state vectors of a j-th inner element having a boundary surface in common with an i-th inner element.

In case where self equilibrium element solutions are used (DMII).

Since the volume integral, which is the first term in the left member of Equation (16), disappears, simply

$$\iint_{s\sigma}\left(T_i - T_j\right)\delta u_i\, ds = 0 \qquad (20)$$

represents the govering variational principle.

(ii) Force method

Since the variational principle of the force method starts from an element solution satisfying the first formula of Equation (17) ((a) equilibrium condition formula) and the third formula thereof ((c) force boundary condition formula) in advance, the govering variational equation is given by:

$$\iint_{su}\left(u_i - \overline{u_i}\right)\delta T_i\, ds = 0 \qquad (21)$$

(iii) General methods for obtaining solutions by the mixed formulation

By general methods for obtaining solutions by the mixed formulation the govering equations are Equation (16). However, in case where self equilibrium element solutions are used, the govering equations are simplified as a following Equation (22).

$$\iint_{S\sigma}\left(T_i - \overline{T_i}\right)\delta u_i\, ds - \iint_{su}\left(u_i - \overline{u_i}\right)\delta T_i\, ds = 0 \qquad (22)$$

If Equation (22) is rewritten more precisely, for a set of finite elements

$$\sum_i \left\{ \iint_{s\sigma i}\left(T_i - T_j\right)\delta u_i\, ds - \iint_{su}\left(u_i - u_j\right) \right\}\delta T_i\, ds = 0 \qquad (23)$$

can be obtained. Equation (23) means a surface integral between an i-th inner element and a j-th inner element adjacent thereto. The surface integrals given by the first and the second term in the left member of Equation (22) are assigned to the external boundary surfaces Sσ and Su, respectively.

Further, concerning problems of inelastic analysis by the finite element method described previously, the inventor of the present invention has recently confirmed that, representing a linear displacement field by

$$u= Ad + B\sigma$$

(u, d and $\sigma$ are vectors, while A and B are matrices), it corresponds to a case where element variable are deformable displacement d and uniform force components $\sigma$ in an inner core of elements, that in addition equations representing zero order continuity conditions are those representing accordance of displacement vectors at two ends of a common boundary side of elements adjacent to each other, i.e. at three apices of each element, that first order simultaneous condition equations are dependent and that equilibrium equations of a whole system are completely in accordance with those obtained by the displacement method. As the result, it has become clear that conventional CST elements are first order elements by the present method, in which element parameters are deformable displacements d and uniform stress $\sigma$ in an inner core of elements.

In this way it is possible to conceive first order elements, for which prior art concept of node displacements is abandoned, and these elements are called corrected RBSM elements.

When increment analysis is effected by using these corrected RBSM elements, it is possible to effect reasonable inelastic analysis consistent from elasticity to a collapse state through plasticity while taking deformation of elements into account. This idea was enlarged and developed to a new idea to represent an element displacement field by finite term polynomials of coordinate functions and to use undetermined coefficients thereof as new element state variables. It was further developed to a new method for analyzing numerically partial differential equations according to the present invention suitable for calculation of phenomena by means of an electric computer.

That is, according to the present invention, for the field of deformable mechanics, it is not necessary to use the least squares method.

BRIEF DESCRIPTION OF THE DRAWINGS

Fig. 1 is a diagram for explaining background of the method for analyzing a non-linear problem according to the present invention, for which a mixed boundary value problem in a two-dimensional domain is adopted as an example;

Fig. 2 is a diagram for explaining a defined domain decomposed by the discrete analyzing method;

Fig. 3 is a flowchart showing a procedure for the discrete analysis in the example indicated in Fig. 2;

Fig. 4A and 4B are diagrams showing examples of mesh decomposition of the defined domain;

Fig. 5 is a block diagram showing a construction of an embodiment of an electronic computer, to which the discrete analyzing method can be applied;

Fig. 6 is a block diagram showing an embodiment of an analyzing calculation procedure, in case where the analyzing calculation is carried out by means of the hardware structure indicated in Fig. 5;

Fig. 7 is a block diagram showing a construction of another embodiment of an electronic computer, to which the discrete analyzing method can be applied;

Fig. 8 is a diagram showing a square flat plate, four sides of which are fixed, object of analysis in the embodiment (analysis of elements in plate bending);

Fig. 9 is a diagram showing an example of a domain of the flat plate to be analyzed indicated in Fig. 8 and mesh decomposition;

Fig. 10 is a diagram showing an example of distribution of flexion in the flat plate on the basis of the numerical analyzing method according to the present invention;

Fig. 11 is a diagram showing an example of distribution of inclination angle in the flat plate on the basis of the numerical analyzing method according to the present invention;

Fig. 12 is a diagram showing an example of distribution of bending moment in the flat plate on the basis of the numerical analyzing method according to the present invention;

Fig. 13 is a diagram showing an example of distribution of shearing force in the flat plate on the basis of the numerical analyzing method according to the present invention;

Figs. 14A and 14B are diagrams for explaining a simple example of a cubic framework;

Figs. 15A to 15F are diagrams for explaining deformations when horizontal force is applied to the cubic framework indicated in Fig. 14A;

Fig. 16 is a diagram showing an example of a gate-shaped framework;

Fig. 17 is a diagram of an example of a model of analysis, for which eigenfrequencies are obtained by means of an electronic computer;

Fig. 18 is a diagram showing an elastic bar model used for calculation according to the Saint Venant' s Torsion theory;

Fig. 19 is a diagram showing force boundary conditions in a torsion problem;

Fig. 20 is a diagram showing a cross-section of a bar having a square cross-section;

Fig. 21 is a graph representing the results indicated in TABLE 4.

Fig. 22 is a graph representing the results indicated in TABLE 5;

Fig. 23 is a diagram showing convergence of solutions, which are the calculation results in the torsion analysis problem of the elastic bar;

Fig. 24 is a diagram for explaining a representative element (a domain obtained by decomposition) of a set of finite elements (defined domain) and three elements adjacent thereto;

Fig. 25 is a concept diagram of analyzing blocks used for a numerical analysis processing apparatus according to the present invention;

Fig. 26 is a block diagram showing a construction example of the numerical analysis processing apparatus according to the present invention;

Fig. 27 is a diagram showing a construction example of analyzing blocks;

Fig. 28 is a diagram showing another construction example of the analyzing blocks;

Fig. 29 is a diagram showing still another construction example of the analyzing blocks;

Fig. 30 is a block diagram showing a connection example between different analyzing blocks;

Fig. 31 is a diagram showing an example of analyzing blocks constructed so that they can be jointed with each other; and

Fig. 32 is a flowchart showing an example of numerical analyzing operation by means of the numerical analysis processing apparatus.

## DESCRIPTION OF THE PREFERRED EMBODIMENTS

The new method for numerically analyzing partial differential equations according to the present invention is constructed on the basis of the discrete analyzing method consisting of steps as described below, which are devised by the present inventor, and can be a basic structure of a program giving a calculation procedure by means of an electronic computer.

(1)[Discrete analysis (general case)]

A given domain is decomposed into a finite number of small domains $D_i$ ($i=1 \sim n$).

Approximate solutions are constructed by superposing a general solution and special solutions of homogeneous equations containing a finite number of undetermined coefficients on the basis of the well-known superposition principle for each small domain $D_i$.

In this case, this is effected on condition that element solutions obtained for each domain $D_i$ satisfy the geometrical boundary continuity condition equations (Equation (2')) and the natural boundary continuity condition equations (Equation (3')) on boundary sides, at which it is adjacent to others.

Further this is effected on condition that, for peripheral boundary conditions they satisfy either the geometrical condition equations (Equation (2)) or the natural boundary continuity condition equations (Equation (3)) on the boundary sides of each element.

Approximate solutions can be obtained, if element undetermined coefficients can be determined so that the whole element solutions deduced in this way satisfy all the inner boundary conditions and the outer boundary conditions, which are imposed. In case where the approximate solutions are sought, attention is paid so as to deduce a square matrix equation, in which the number of undetermined coefficients is in accordance with the number of boundary conditions, taking degrees of freedom of elements and the number of element boundary conditions into account. That is, since generally a matrix vertically long (number of condition equations >> total number of undetermined coefficients) is obtained, when equations of a whole system are formed by combining algebraic equations with respect to the undetermined coefficients of different elements, as a method it is necessary to assign suitably degrees of freedom of element displacement functions to three sides so that the equilibrium conditions, the inner boundary conditions and the outer boundary conditions are satisfied in average. Or, in order to deal with the matrix as it is, a general inverse matrix or the least squares method is used.

Then, in case where a square matrix equation is solved, following three methods can be conceived.

(i) Method to solve the square matrix equation as it is (direct method)

When the square matrix equation is solved as it is, for a problem of two-dimensional elasticity solutions thereof are represented by a mixed formulation of undetermined coefficients with respect to displacement and force.

(ii) Method to decomposing the matrix

It is the displacement method, if the matrix is decomposed and the displacement continuity condition equations are eliminated.

(iii) It is the force method, if the matrix is decomposed and contrarily to (ii), the force continuity condition equations are eliminated.

(2)[Discrete analysis (case in the field of solid body mechanics)]

As described previously, for numerical analysis in the field of solid body mechanics, since it is possible to obtain equations representing relationships between undetermined coefficients of different elements, which are necessary for satisfying continuity conditions of state vectors (displacements and forces in the case of solid body mechanics) on boundary peripheries of different elements, on the basis of Equation (16), approximate solutions can be obtained without using the least squares method.

Summarizing the above description, according to the present invention, approximate solutions of linear and non-linear problems represented by partial differential equations are obtained by deducing govering equations (i.e. partial differential equations representing phenomenon) in a finite number of domains, into which a defined domain is decomposed, and expanded identical equations with respect to a floating coordinate system on boundary sides or surfaces so that inner and peripheral boundary conditions are satisfied throughout on the sides or surfaces, using neither the finite difference method, the finite element method, nor the boundary element method belonging to the category of the prior art collocation method, and finally by solving a square matrix equation.

Further, since according to the present invention equations to be solved can be solved for every element independently from each other, although decomposing a defined domain into a finite number of small domains (finite number of elements), govering equations and a group of element solutions satisfying boundary conditions between a relevant element and elements adjacent thereto are solved in each of the small domains by the direct method or by the iteration method, the method according to the present invention differs from methods, in which they can be solved only after a whole system has been constructed as by the prior art finite difference or finite element method. Consequently there is no restriction on so-called granularity and it is possible to execute calculation having a larger scale than calculation effected at present by means of a large scale electronic computer, by combining a plurality of computers without using parallel computers specifically designed.

[Examples of models to be analyzed]

Fig. 2 is a diagram for explaining a defined domain decomposed by the discrete analyzing method. In Fig. 2, the defined domain P is decomposed into small domains $\alpha$, $\beta$, $\gamma$ and $\delta$ by segments AB, AC, BC, AB, BD, AD, BC, BE, CE, AC, AF and FC. $\alpha$, $\beta$, $\gamma$ and $\delta$ are vectors having unknown coefficients, which are determined by values of domains adjacent to each other.

Here an equation of element displacement function is:

$$u = N (x, y) a \tag{24}$$

and an equation representing continuity conditions of state vectors between elements adjacent to each other can be given by:

$$Ga = H\beta + I\gamma + J\delta + K \tag{25}$$

That is, by the analyzing method according to the present invention, although domain decomposition is effected, no node information (at A, B, C, D and E in Fig. 2) is used and representing state vectors by polynomials in a coordinate system, equations (9) representing continuity conditions for the state vectors between elements adjacent thereto are formed step by step by the least squares method. In this case, since these equations can be obtained independently from each other, approximate solutions can be obtained by allocating these obtained equations to several processors and by executing parallel calculations by Jacobi's method or other reiteraction method.

[Procedure for the discrete analysis]

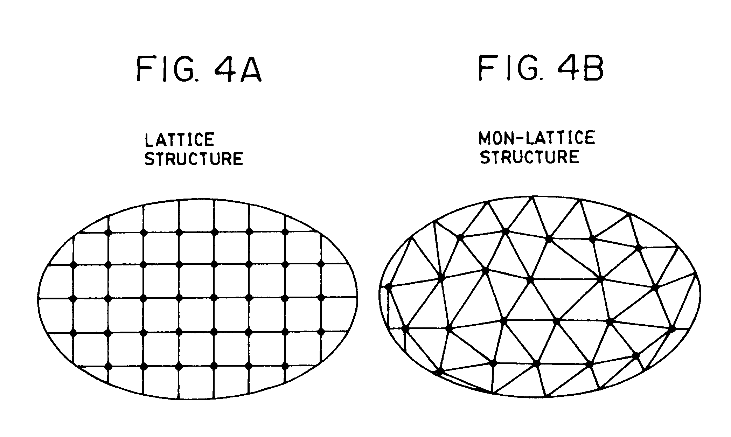

Fig. 3 is a flowchart showing a procedure for the discrete analysis in the example indicated in Fig. 2. Further Figs. 4A and 4B are diagrams showing examples of mesh decomposition of the defined domain, Fig. 4A indicating an example of lattice structure type mesh decomposition, while Fig. 4B indicates an example of non-lattice structure type mesh decomposition.

Step S1:

In Fig. 3, the defined domain is decomposed into small domains (mesh decomposition) by the domain decomposition method (DDM). In this case, although the mesh decomposition can be effected arbitrarily, a lattice structure type decomposition (Fig. 4A) is preferable. An arbitrary degree of freedom of element can be adopted and further it is not necessarily same. Moreover, in analysis of a non-linear problem, if a side is longer than a certain extent, it may be decomposed into two elements by inserting a new node into a middle part of the side (concerning the amount of calculation, the number of elements is increased by 1 and the number of condition equations increases, corresponding to increase in the number of sides by 2).

Step S2:

A field element state vectors is presupposed by approximating the state vectors in each of the small domains (mesh) by using coordinate variables (generally orthogonal coordinates) in an orthogonal curvilinear coordinate system.

Step S3:

Solutions satisfying given govering equations are sought (introduction of self equilibrium solutions).

Step S4:

Next, in order to satisfy continuity conditions of the state vectors on the boundary periphery of every element, necessary equations representing relationships between undetermined coefficients of different elements (equations representing continuity conditions of element state vectors) are sought by the finite difference method or the least squares method to obtain a square matrix equation. In the case of solid body mechanics, the equations representing relationships between undetermined coefficients of different elements satisfying the continuity conditions of the state vectors (displacement, force) are obtained, starting from Equation (16), on the basis of Hu- Washizu' s principle, to get the square matrix equation (Equation (25)).

Step S5:

Further the element matrix is reduced by decomposition, taking the boundary conditions given at the periphery into account.

Step S6:

The obtained square matrix equation is solved either by the iteration method as it is or by the direct method as a whole.

Step S7:

The state vectors at an arbitrary point are calculated by using calculation results thus obtained.
By the procedure described above it is possible to obtain state vectors at arbitrary points so as to be continuous between different elements in the domain P indicated in Fig. 2 by using parallel electronic computers consisting of a plurality of processors or a plurality of electronic computers connected through a communication network.
Although explanation has been made in the above, supposing that the defined domain is a two-dimensional space, the method for numerically analyzing partial differential equations according to the present invention can be applied to a three-dimensional space.

[Example of hardware construction (1)]

Example of application to a multiprocessor type computer

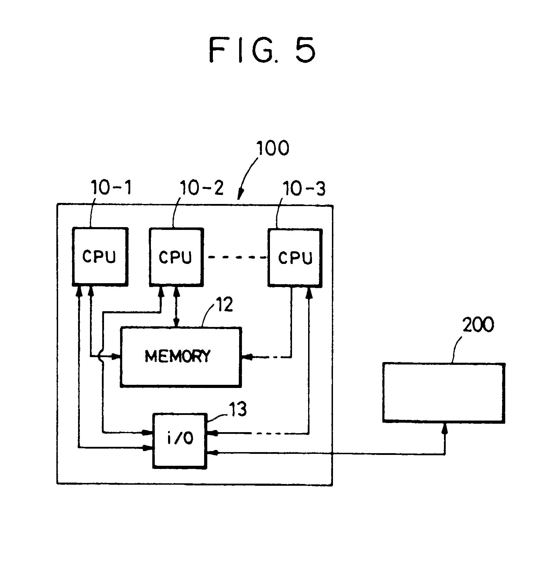

Fig. 5 is a block diagram showing a construction of an embodiment of an electronic computer, to which the discrete analyzing method can be applied, which is a construction example, in case where analyzing calculation is carried out by parallel processing by means of a multiprocessor.

In Fig. 5, in the multiprocessor 100, a plurality of processors 10-1, 10-2, ..., 10-n (in the embodiment n=16) have a memory device 12 and an in/output device 13 in common. An external device 200 (in this example an electronic computer such as a personal computer (hereinbelow called simply a persocom, etc.) is connected with the in/output device 13, although it is not indicated in the figure. The in/output device 13 consists of an input device such as a keyboard, etc., an output device such as a printer, a monitor, etc., and a magnetic disk or optical disk device.

[Analyzing calculation procedure using the multiprocessor]

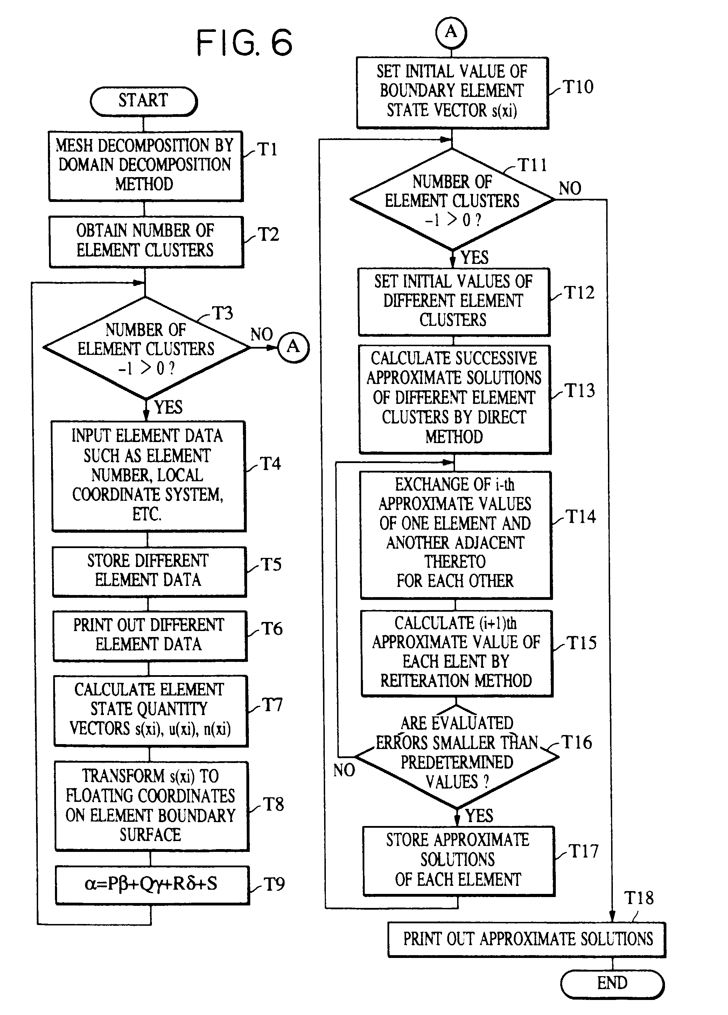

Fig. 6 is a block diagram showing an embodiment of an analyzing calculation procedure in case where the analyzing calculation is carried out by means of the hardware structure indicated above.

Using the hardware structure, the external electronic computer 200 side executes Steps T1 to T9 in Fig. 6, while the multiprocessor 100 side executes Steps T10 to T18.

Step T1:

The defined domain is displayed on a screen. A domain decomposing subprogram on the basis of the domain decomposition method (according to a user's desire it is preferable to specify an origin of a local coordinate system and to construct the subprogram so as to be able to decompose further finely the domain) is executed in order to decompose the defined domain and element numbers are allocated to small domains obtained by the decomposition.

Step T2:

The number of elements, i.e. the number of the small domains obtained by the decomposition ($\alpha$, $\beta$, $\gamma$ and $\delta$ in the example indicated in Fig. 2), is obtained as the number of clusters c.

Step T3:

Following Steps T4 to T9 are executed c (number of clusters) times repeatedly and the procedure proceeds to Step T10 after having repeated them c times.

Step T4:

Assign an element number and input element data such as coordinates (x, y) in the local coordinate system, values representing properties of matter, etc. (Different element data may be inputted in an order of the element number.)

Step T5:

Store the different element data in a recording medium (e.g. a magnetic disk, a floppy disk, a magnetic tape, etc.).

Step T6:

Print out the different element data for the purpose of check and record preparation.

Step T7:

Effect calculation of element state vectors S(xi), U(xi) and II(xi) (S, U and II are vectors).

Step T8:

Transform a boundary element state vector S(xi) into that represented in a floating coordinate system on a element boundary surface.

Step T9:

Calculate $\alpha$=PB+Q$\gamma$+R$\delta$+S ($\alpha$, P, Q and S are vectors) and record results thus obtained in a recording medium.

Step T10:

In case where Steps T4 to T9 are executed c (number of clusters) times in Step T3, input calculation results obtained in Step T9 from the external device 200 to the multiprocessor 100 through the in/output device 3 and set initial values of the boundary element state vector S(xi), correspondingly to the different element number.

Step T11:

Following Steps T12 to T17 are executed c (number of clusters) times repeatedly and the procedure proceeds to T18 after having repeated them c times.

Step 12:

Set initial values (coordinates (xo, yo) in the local coordinate system, initial values representing properties of matter, etc.) for the different element clusters.

Step T13:

Calculate successive approximate solutions for the different element clusters by the direct method.

Step T14:

Exchange an i-th (i=1~n) approximate value of a d-th (1<d$\leq$c) element with an i-th approximate value of an element adjacent thereto.

Step T15:

Calculate a (i+1)th approximate value of every element by the iteration method.

Step T16:

Putting i=i+1 and returning to T14, repeat T14 to T15, until the (i+1)th approximate value comes within a predetermined extent of errors.

Step T17:

In case where the (i+1)th approximate value is within the predetermined extent of errors, the element number and the approximate solution are stored in the memory device 12 and the procedure returns to T11.

Step T18:

Approximate solutions are taken out from the memory device 12 and printed out through the in/output device 13 after having been edited in a form to be printed. (They may be also displayed on a monitor screen.)

Although a construction, in which the multi-processor 100 and the external electronic computer 200 are connected with each other through a cable, etc., is shown in the example indicated in Fig. 6, the multiprocessor 100 and the external electronic computer 200 may be separated and transmission and reception of data may be effected through a recording medium.

Further, the apparatus may be so constructed that no external electronic computer 200 is connected and that a certain processor in the multiprocessor serving as a main processor executes operations similar to those effected by the external electronic computer 200.

[Example of hardware construction (2)]

Example of application to a single processor type computer

In case where the number of elements is small (i.e. in case where the size of the square matrix is small), the discrete analysis according to the present invention can be effected not by using the multiprocessor as indicated in Fig. 5, but by using an electronic computer (selected, depending on the size of the matrix, among large or middle scale computers, personal computers, etc. (not indicated in the figure)) comprising a single processor (CPU), RAM, ROM storing programs, a printer, a monitor and an external memory device.
In this case, operations allocated to the external computer 200 and the multiprocessor 100 in the flowchart indicated in Fig. 6 may be effected one after another by means of the single processor.

[Example of hardware construction (3)]

Example of application to a network system

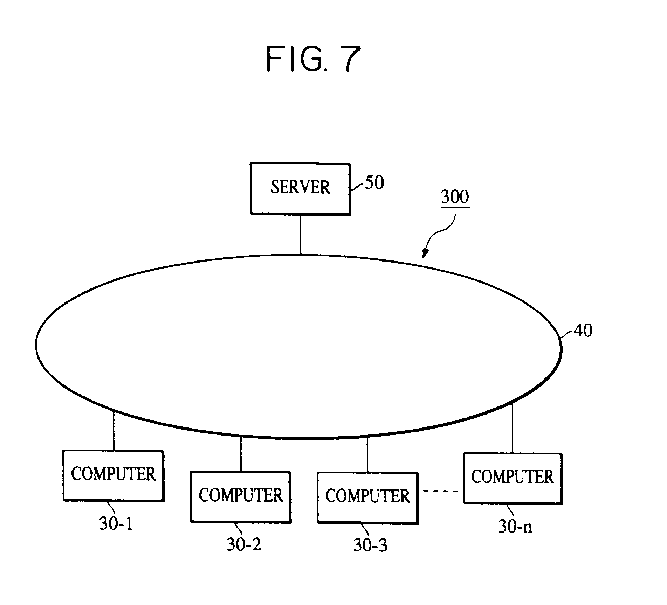

Fig. 7 is a block diagram showing a construction of another embodiment of an electronic computer, to which the discrete analyzing method can be applied, indicating an example of construction in case where the analyzing calculation is carried out by parallel processing using a communication network.
In Fig. 7, a numerically analyzing network 300 comprises computer devices 30-1, 30-2, ...., 30-n (n=6 in the embodiment) connected with a communication line 40 and a server 50, which gives/receives to/from these computer devices 30-1, 30-2, ...., 30-n through the communication line 40 and controls emission/reception of data between the computer devices 30-1, 30-2, ...., 30-n.
A communication network such as the internet, etc. may be used for the numerically analyzing network 300. Or it may be a network consisting of a line exclusively used for connecting different institutes, etc. Further it may be of mixed type thereof.
The server 50 is a computer device comprising a processing device, a communication control section, a memory device and an in/output device, with which a data base can be connected.
The computer devices 30-1, 30-2, ...., 30-n are not necessarily large scale electronic computers, but they may be devices having such a processing speed and memory capacity that they can carry out operations of a square matrix of predetermined order and provided with a communication control function. For example, they may be persocoms, work stations, etc.
Due to requirement for the allocation of the square matrix, in case where numerical analysis is effected, if processing speeds and memory capacities of different computer devices differ considerably from each other, since efficiency is restricted by the computer having the lowest capacity (e.g. all the computer devices 30-1, 30-2, ...., 30-n connected with the numerically analyzing network 300 may be large scale electronic computers or all the computer devices 30-1, 30-2, ...., 30-n may be computer devices having a persocom level, but in a construction, in which the computer devices 30-1 and 30-2 are large scale computers, while 30-3, ...., 30-n are persocoms, processing efficiency of the whole system is restricted by processing efficiency of the persocoms), it is preferable that differences in performance are within a certain extent.

[Analyzing calculation procedure using a communication network]

In case where a communication network is used, analyzing calculation can be effected by a procedure similar to that indicated by the flowchart in Fig. 6.
In this case, Steps T1 to T9 are executed on the side of the server 50 and the initial values in Steps T10 to T12 are sent from the server to the different computer devices 30-1, 30-2, ...., 30-n through the communication line 40 so that Steps T13 to T17 are executed by the computer devices 30-1, 30-2, ...., 30-n and that approximate solutions are transmitted to the server 50 after termination of the execution in order that the server 50 can output the approximate solutions. Further the apparatus may be also so constructed that different terminals (different computer devices 30-1, 30-2, ...., 30-n) can effect timely exchange of approximate values in T14 between elements adjacent to each other through the communication line 40 under control of the server 50.
Although the server 50 and the terminals are separate devices in the example indicated in Fig. 7, the apparatus may be so constructed that either one (e.g. the computer device 30-1) of the different terminals (computer devices 30-1 to 30-n) is used in common with the server.

[Embodiments]

As described in the paragraph "Summary of the Invention", the finite difference method and the finite element method are essentially collocation methods and as a representative of problematical points on convergence and accuracy of solutions obtained by these methods there is known a so-called plate bending element problem. An example of application of the present invention to the plate bending element problem will be described in Embodiment 1. Further an example of application to deformation and force analysis of a cubic framework will be described in Embodiment 2, while an example of application to torsion analysis of an elastic bar will be treated in Embodiment 3.

<Embodiment 1> Example of application to analysis of plate bending elements

As an embodiment of analysis of the flat plate bending problem, the present invention is applied to a problem of bending a square plate, whose four sides are fixed, subjected to a uniformly distributed load. It is an example, in which a series of numerical calculations are carried out by means of electronic computers after having prepared corresponding programs (including calculation subroutines corresponding to different equations) on the basis of the basic procedure of the present invention indicated in Fig. 3 (more concretely speaking, the flowchart indicated in Fig. 6).

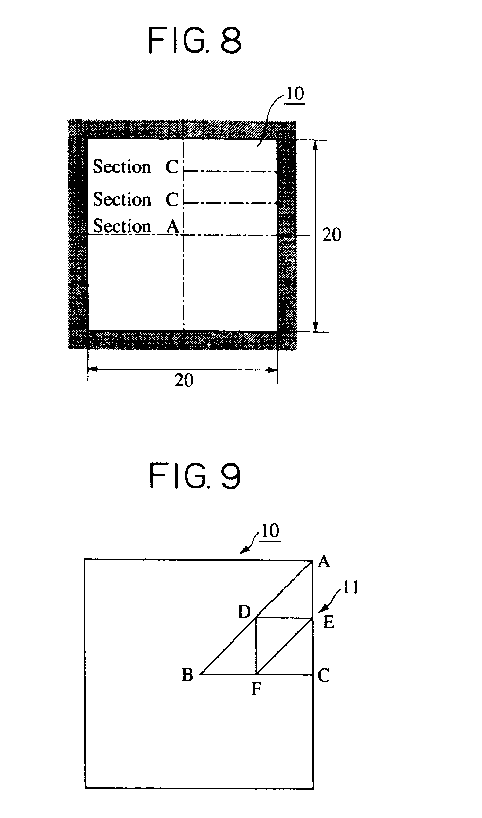

Fig. 8 is a diagram showing a square flat plate, four sides of which are fixed, object of analysis in the embodiment. A side of the flat plate 10 is 20cm long in this embodiment. Fig. 9 is a diagram showing an example of a domain of the flat plate 10 to be analyzed and mesh decomposition. Since the flat plate 10 is symmetric with respect to two axes, a region to be analyzed is 1/8 area thereof indicated by $\triangle$ABC and in the present embodiment it is decomposed into four triangles.
At first, since displacement is symmetric with respect to a side $\overline{BC}$, boundary conditions therefor are given by a following equation (26).
They are on the side AB or BC

$$\frac{\partial w}{\partial n}=0, V_n=0 \tag{26}$$

The side $\overline{AC}$ is fixed, i.e.

$$w = 0, \frac{\partial w}{\partial n}=0 \tag{27}$$

Further, on the inner boundary sides $\overline{DE}$, $\overline{EF}$ and $\overline{FD}$ State vectors

$$\text{State vectors } S^T=\left[\omega, \frac{\partial \omega}{\partial n}, M_n, V_n\right] \tag{28}$$

are continuous.
That is, supposing S1=S2, this means that S1=S2, W, W1=W2, ·W1/·n=·W2/·n, Mn1=Mn2, Vn1=Vn are valid simultaneously. (In other words, this means that these equations are valid at any point on the sides.)
Govering equations of the plate bending problem are given by:

$$\begin{rcases} \triangle\triangle\omega(x,y)=f(x,y) \\ f(x,y)=\dfrac{q(x,y)}{D} \end{rcases} \tag{29}$$

(1) Flexion functions

Displacements to be sought are approximated by a power series of x and y of p-th order.

$$\omega(x,y)=\sum_{p=0}^{p}\sum_{q=0}^{q} a_{pq}\, x^{p-q}\, y^{q} \qquad (30)$$

That is, if it is expanded,

$$\omega(x,y)=a_{00} + a_{10}x + a_{01y} +\cdots\cdots+ a_{p0}x^{p} + a_{(p-1)1}x^{p-1}y+\cdots\cdots+a_{0q}y^{q} \qquad (31)$$

is obtained. At this time, since $\omega$ is a formula of (p-1)(p-2)/2 terms, the degree of freedom thereof is (p-1)(p-2)/2.

On the other hand, since the left member of Equation (29) is fourth order differences of $\omega$ (x,y), it is a (p-4)th order formula, the number of terms of which is (p-3)(p-2)/2. Consequently (p-3)(p-2)/2 coefficients are determined by using Equation (29) and there remain

$$(p+1)(p+2)/2-(p-3)(p-2)/2 = 4p-2 \qquad (32)$$

undetermined coefficients. Since it is necessary that continuity conditions of the state vectors (displacement and boundary force) are valid on three sides, taking it into account that the elements are triangular, in order to deal with the three side on equivalent basis with each other, p is selected so that the formula (32) is a multiple of 3.

(2) Allocation of the degree of freedom to the sides of each element

In case where p=5, dividing the formula (32) by 3, the degree of freedom, which can be allocated to each side, is 6. On the inner boundaries between different elements, since the equations represent relationships of state vector components between different elements, the degree of freedom allocated to one side is 12, which is a sum of the degree of freedom of adjacent two elements. On the other hand, on the peripheral boundary, since the right member of the equations representing the continuity conditions of the state vector components is given as boundary conditions, the degree of freedom, which can be allocated, is 6.

[Example of numerical calculation]

On the basis of consideration as described above, supposing the size of the flat plate 10 and load conditions for the flat plate 10 as follows:

| size | 20cm x 20cm |
|---|---|
| thickness | 1.0cm |
| modulus of elasticity | 1.0E |
| poison ratio | 0.3 |
| boundary condition | fixed periphery |
| load (per unit area) | 1.0 |

taking allocation of the degree of freedom as indicated in TABLE 1 (Table of numerical calculation conditions) to the boundary sides into account, corresponding programs were prepared on the basis of the basic procedure indicated in Fig. 3 (more concretely speaking the flowchart indicated in Fig. 6) under following conditions and a series of numerical calculations were carried out by means of an electronic computer.

TABLE 1

| | CONDITION FOR NUMERICAL CALCULATIONS | | | | | | | | | | | | | |
|---|---|---|---|---|---|---|---|---|---|---|---|---|---|---|
| | FIXED BOUNDARY | | | SYMMETRICITY BOUNDARY | | | INNER BOUNDARY | | | | | | | |
| | A | B | C | A | B | C | A | B | C | D | E | F | G | H |
| $w$ | 5 | 4 | 3 | 5 | 4 | 3 | 6 | 5 | 5 | 4 | 4 | 3 | 2 | 2 |

TABLE 1   (continued)

| | CONDITION FOR NUMERICAL CALCULATIONS | | | | | | | | | | | | | |
|---|---|---|---|---|---|---|---|---|---|---|---|---|---|---|
| | FIXED BOUNDARY | | | SYMMETRICITY BOUNDARY | | | INNER BOUNDARY | | | | | | | |
| | A | B | C | A | B | C | A | B | C | D | E | F | G | H |
| $\frac{\partial w}{\partial n}$<br>$M_n$<br>$Q_n$ | 1 | 2 | 3 | 1 | 2 | 3 | 4<br>1<br>1 | 5<br>1<br>1 | 4<br>2<br>1 | 4<br>2<br>1 | 3<br>3<br>2 | 3<br>3<br>3 | 2<br>4<br>3 | 2<br>3<br>3 |
| TOTAL | 6 | 6 | 6 | 6 | 6 | 6 | 12 | 12 | 12 | 12 | 12 | 12 | 12 | 12 |

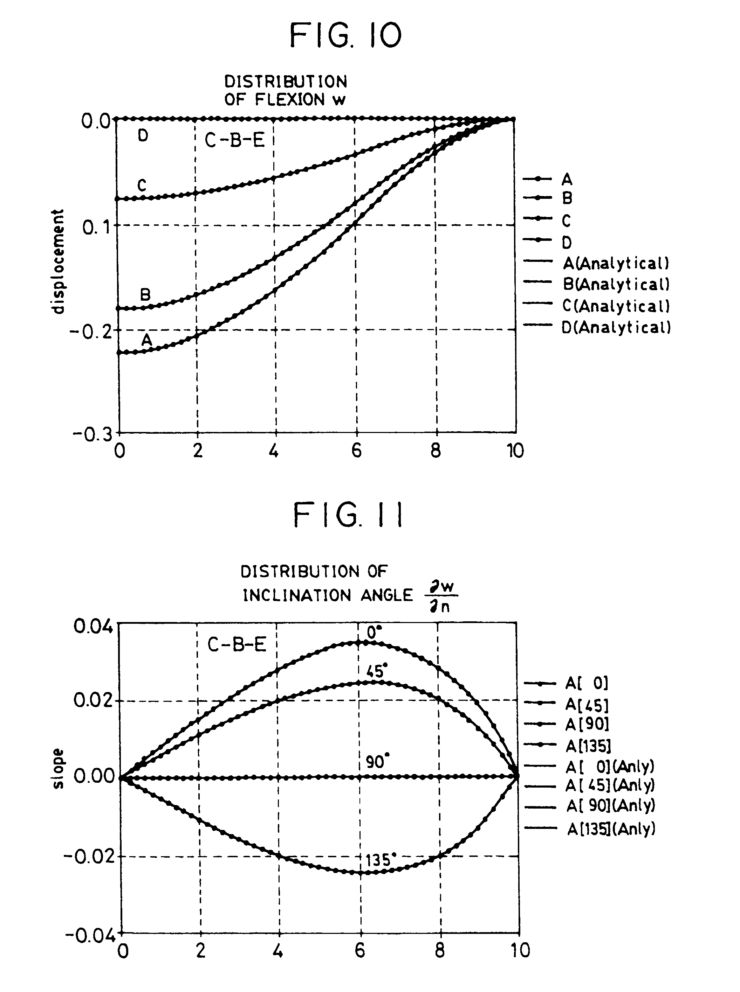

Figs. 10 to 13 are diagrams representing results obtained by applying the numerical analyzing method according to the present invention to the flat plate 10 under the conditions and the degree of freedom, for which a fifth order polynominal of x and y is used for an element displacement function. The analysis results were obtained by dividing the 1/8 area 11 indicated in Fig. 9 into four elements in mesh.

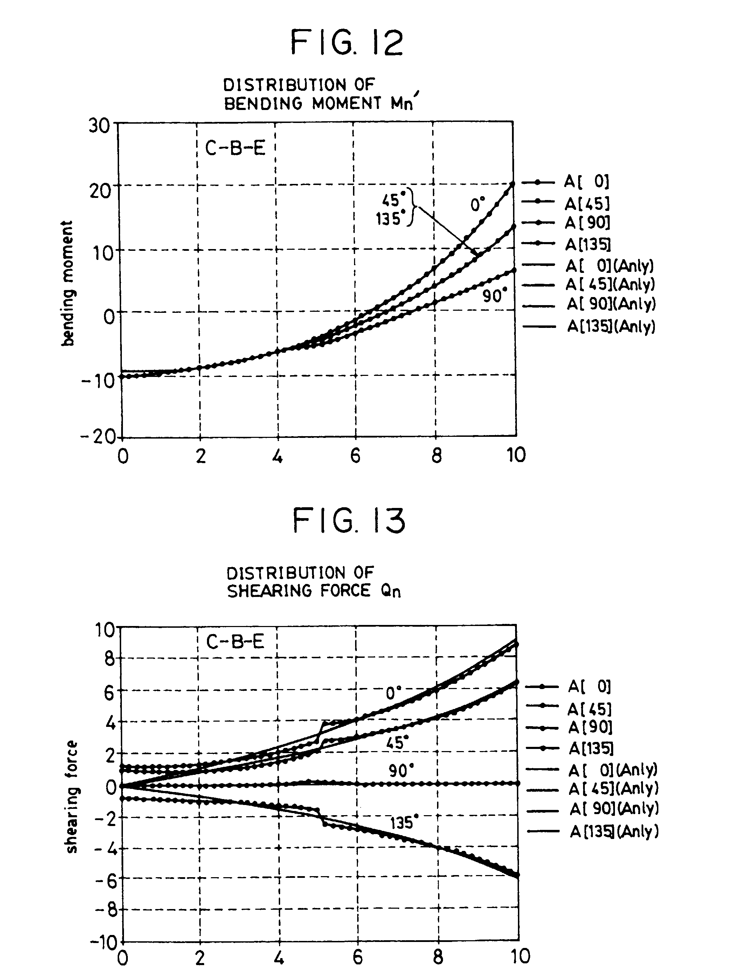

That is, Fig. 10 is a diagram showing a flexion distribution in the flat plate 10; Fig. 11 is a diagram showing an inclination angle distribution; Fig. 12 is a diagram showing a bending moment distribution; and Fig. 13 is a diagram showing a shearing force distribution. In each of them, for comparison, precise solutions (solid line) given by Timoshenko are also indicated. As indicated in TABLE 2 (Table of comparison of errors from precise solutions), comparison thereof with the precise solutions was effected.

Table 2

| RELATIVE ERRORS OF FLEXION AT CENTER OF PLATE | | | | | | | | | |
|---|---|---|---|---|---|---|---|---|---|
| RELATIVE ERRORS OF CENTRAL DISPLACEMENT | NUMBER OF ELEMENTS: 4 | | | | | | | | |
| FIXED BOUNDARY | A | | | B | | | C | | |
| SYMMETRICITY BOUNDARY | A | B | C | A | B | C | A | B | C |
| INNER BOUNDARY   A | -0.286 | -0.075 | -0.081 | -0.431 | -0.005 | 0.0054 | -0.926 | 0.080 | -0.805 |
| B | -0.281 | -0.147 | -0.005 | 0.382 | -0.009 | 0.199 | -0.400 | 0.560 | 0.076 |
| C | -0.099 | -0.008 | 0.167 | -0.150 | 0.019 | 0.121 | -0.635 | -0.256 | -0.126 |
| D | -0.112 | -0.006 | 0.044 | -0.159 | -0.010 | 0.049 | -0.120 | -0.0004 | -0.075 |
| E | 0.037 | -0.006 | 0.158 | 0.078 | -0.009 | -0.164 | 0.085 | 0.008 | -0.021 |
| F | 0.381 | -0.007 | 0.220 | 0.344 | 0.133 | 1.128 | 0.157 | 0.013 | 23 |
| G | -0.253 | -0.147 | -0.026 | -1.32 | 0.008 | -0.055 | 5.7 | 0.013 | 0.275 |
| H | 1.040 | -0.009 | 19.6 | -30 | -0.007 | 31 | -0.600 | -0.005 | 22 |

As indicated in TABLE 2, in case where degrees of freedom A, B and C are allocated to the fixed boundary, the symmetricity boundary and inner boundaries, respectively, when the calculation results obtained by the method according to the present invention and Timoshenko' s precise solutions are compared, errors E are almost equal to zero for the flexion angle $\omega$ and the inclination angle $\partial\omega/\partial n$. Although some errors are found for the bending moment $M_n$, solutions of high accuracy technologically tolerable are obtained also for the shearing force $Q_n$.

Solutions having such a high accuracy cannot be obtained by analyzing methods on the basis of the prior art finite element method. Usefulness of the analyzing method according to the present invention was thus confirmed in a concrete application example.

<Embodiment 2-1> Application example to deformation and force analysis of a cubic framework (1)

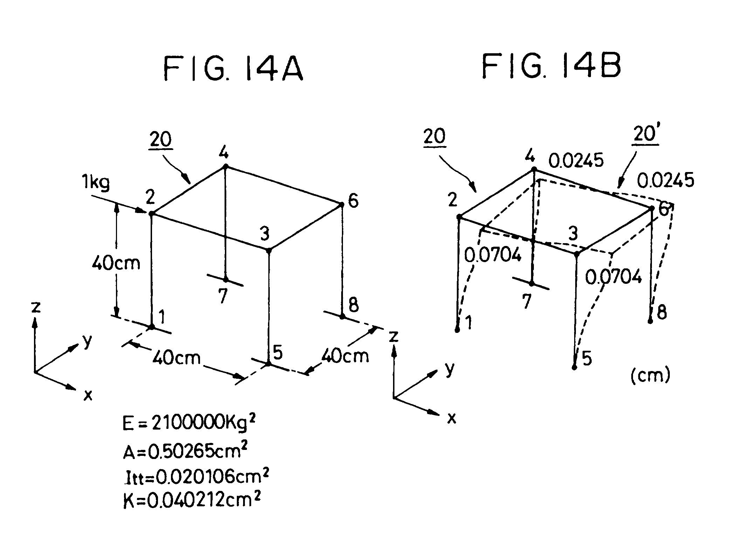

Fig. 14A is a diagram showing a simple example of a cubic framework, in which reference numeral 20 indicates the example of a cubic framework and numerals 1 to 8 mean nodes. Fig. 14B is a diagram showing displacement (indicated by broken lines), in case where a horizontal force of 1kg is applied to the cubic framework 20 at the node 2 along the X axis, in which reference numeral 20' indicates an example of the deformed cubic framework.

In the present embodiment a horizontal force of 1kg was applied to the cubic framework 20, in which pillars were 40cm long and beams were 40cm long, at the node 2 along the X axis. Results of displacement and force analysis in this case are indicated in Figs. 15A to 15F.

Concretely speaking, the degree of freedom of the beam elements in the cubic framework 20 is 12, while the number of elements is 8 and the lower ends of the pillar elements are fixed. Consequently, since they are fixed, displacement vector components (u, v, w, u', v', w') are zero at the lower ends. Therefore the number of unknown state vector components of the eight beam elements is 72 (=48+24), which is a sum of 4x12=48 for the four upper beam elements and 6x4=24 for unknown counter force of the four pillars.

On the other hand, the number of equations representing continuity conditions for state vectors for the four upper nodes 2, 3, 4 and 6 is a sum of:

number of equations representing force equilibrium continuity conditions:

$$4x6=24$$

number of equations representing displacement continuity conditions:

$$2x6x4=48,$$

i.e. 72. Therefore a square matrix equation of (72x72) is obtained for the whole system. Results obtained by a series of numerical calculations by means of an electronic computer (Figs. 15A to 15F) were completely identical to those obtained by the standard finite element method.

Decomposing the matrix equation of (72x72) into 48 equations relating to the node displacement continuity conditions and remaining 24 equations relating to the equilibrium condition in matrix, it can be rewritten as indicated by Equation (33). (K, a and F are vectors.)

$$\left[\begin{array}{c|c} K_{11} & K_{12} \\ \hline K_{21} & K_{22} \end{array}\right]\left\{\begin{array}{c} a_1 \\ a_2 \end{array}\right\}=\left\{\begin{array}{c} F_1 \\ F_2 \end{array}\right\} \qquad (33)$$

By this matrix decomposition following two equations (Equation 34) and Equation (35)) can be obtained.

$$K_{11}a_1+K_{12}a_2=F_1 \qquad\qquad (34)$$

$$K_{21}a_1+K_{22}a_2=F_2 \qquad\qquad (35)$$

Since vectors K11 and K12 are positive value symmetric matrices of (48x48) and (24x24), respectively, when e.g. Equation (34) is solved with respect to a vector $a_1$

$$a_1=K_{11}{}^{-1}\left(F_1-K_{12}a_2\right) \qquad (36)$$

is obtained. Substituting Equation (36) for $a_1$ in Equation (35) to eliminate $a_1$.

$$K_{21}K_{11}{}^{-1}\left(F_1-K_{12}a_2\right)+K_{22}a_2=F_2 \qquad (37)$$

$$\left(K_{22}-K_{21}K_{11}{}^{-1}K_{12}\right)a_2=F_2-K_{21}\overline{K}_{11}{}^{-1}F_1 \quad (38)$$

can be obtained. Putting

$$\left.\begin{array}{l}K_{22}{}'=K_{22}-K_{21}K_{11}{}^{-1}K_{12}\\ F_2{}'=F_2-K_{21}K_{11}{}^{-1}F_1\end{array}\right\} \quad (39)$$

it can be rewritten as follows:

$$K_{22}'a_2=F_2' \quad (40)$$

Since solutions of Equation (40) can give equilibrium solutions indicating given continuity conditions of displacements at nodes in the framework, they are solutions by the displacement method (DM).

On the contrary,

$$K_{11}'a_1=F_1' \quad (41)$$

Here a method for obtaining solutions of

$$\left.\begin{array}{l}K_{11}{}'=K_{11}-K_{12}K_{22}{}^{-1}K_{21}\\ F_1{}'=F_1-K_{12}K_{22}{}^{-1}F_2\end{array}\right\} \quad (42)$$

is a method for obtaining congruent solutions of displacement satisfying equations representing the equilibrium conditions and the solutions thereof are those obtained by the force method (FM). That is, this means that either by the displacement method or by the force method some solutions can be obtained.

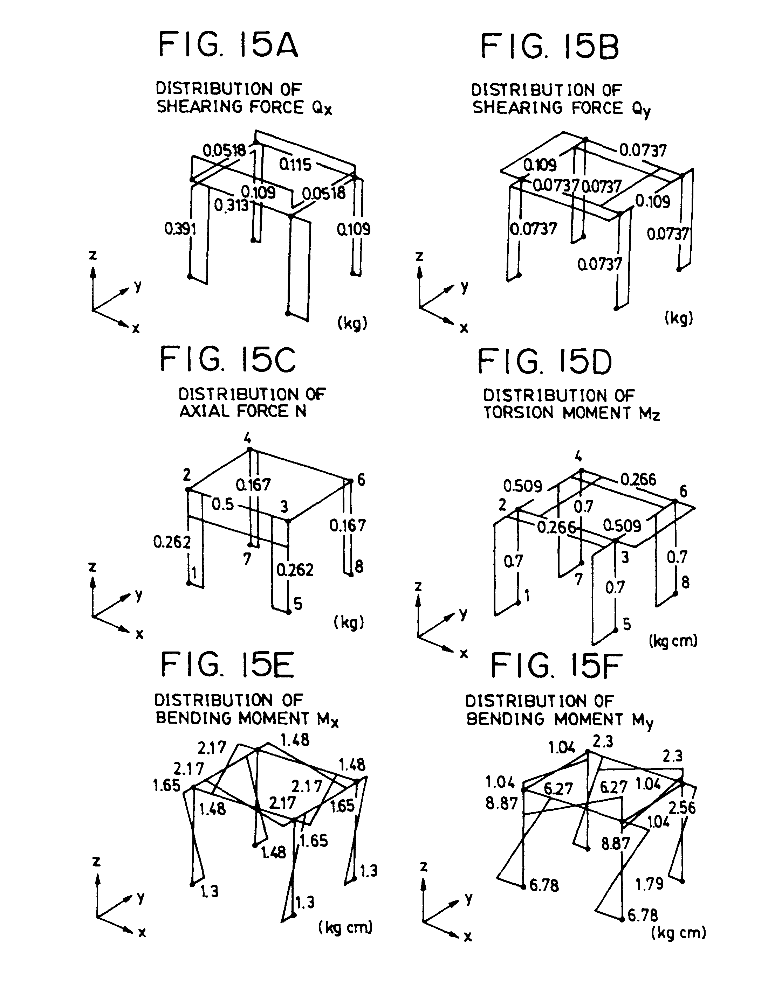

Figs. 15A to 15F are diagrams showing results obtained by deformation and force analysis, in case where a horizontal force of 1kg is applied to the cubic framework 20 indicated in Fig. 14A; Fig. 15A indicating a distribution of shearing force Ox (in unit of kg); Fig. 15B a distribution of shearing force Qy (in unit of kg); Fig. 15C a distribution of axial force N (in unit of kg); Fig. 15D a distribution of torsion moment $M_2$ (in unit of kg/cm); Fig. 15E a distribution of bending moment $M_x$ (in unit of kg/cm); Fig. 15F a distribution of bending moment $M_y$ (in unit of kg/cm).

<Embodiment 2-2> Application example to deformation and force analysis of a cubic framework (2)

The present embodiment is one, in which the present invention is applied to analysis of a vibration problem of a framework structure, corresponding programs are prepared on the basis of the basic procedure of the present invention indicated in Fig. 3 (more concretely speaking the flowchart indicated in Fig. 6), and a series of numerical calculations are carried out by means of an electronic computer.

Inertia forces acting on two end nodes of an element i in the framework can be represented by using a mass matrix of the element, as follows:

$$[m]\{\ddot{d}^i\} = [m]\begin{bmatrix}[c^i(0)]\\[c^i(l)]\end{bmatrix}\{\ddot{a}^i\} \qquad (43)$$

Here [m] is a mass matrix, which can be represented by:

$$[m]=\frac{\gamma A l}{g}\begin{bmatrix}\frac{13}{35} & 0 & 0 & 0 & \frac{11l}{210} & 0 & \frac{9}{70} & 0 & 0 & 0 & -\frac{13l}{420} & 0\\ & \frac{13}{35} & 0 & -\frac{11l}{210} & 0 & 0 & 0 & \frac{9}{70} & 0 & \frac{13l}{420} & 0 & 0\\ & & \frac{1}{3} & 0 & 0 & 0 & 0 & 0 & \frac{1}{6} & 0 & 0 & 0\\ & & & \frac{l^2}{105} & 0 & 0 & 0 & -\frac{13l}{420} & 0 & -\frac{l^2}{140} & 0 & 0\\ & & & & \frac{l^2}{105} & 0 & \frac{13l}{420} & 0 & 0 & 0 & -\frac{l^2}{140} & 0\\ & & & & & \frac{I_x+I_y}{3A} & 0 & 0 & 0 & 0 & 0 & -\frac{I_x+I_y}{6A}\\ & & & & & & \frac{13}{35} & 0 & 0 & 0 & -\frac{11l}{210} & 0\\ & & & & & & & \frac{13}{35} & 0 & \frac{11l}{210} & 0 & 0\\ & & & & & & & & \frac{1}{3} & 0 & 0 & 0\\ & & & & & & & & & \frac{l^2}{105} & 0 & 0\\ & & \text{Sym} & & & & & & & & \frac{l^2}{105} & 0\\ & & & & & & & & & & & \frac{I_x+I_y}{3A}\end{bmatrix}$$

Transforming Equation (43) in coordinates into a coordinate system of the whole, following Equation (44) is obtained:

$$[m]\{\ddot{d}^i\} = [m]\begin{bmatrix}[T]^T\\[T]^T\end{bmatrix}\begin{bmatrix}[c^i(0)]\\[c^i(l)]\end{bmatrix}\{\ddot{a}^i\} = [m]\begin{bmatrix}[C^i(0)]\\[C^i(l)]\end{bmatrix}\{\ddot{a}^i\} = [M]\{\ddot{a}^i\} \qquad (44)$$

Superposition of coefficient matrices is effected by superposing them in an order of the node number similarly to static analysis. What differs from the static analysis is that it is necessary to superpose a relevant line of the inertia matrix [M] on a line corresponding to the mechanical boundary degree of freedom and the mechanical equilibrium conditions for inner nodes.

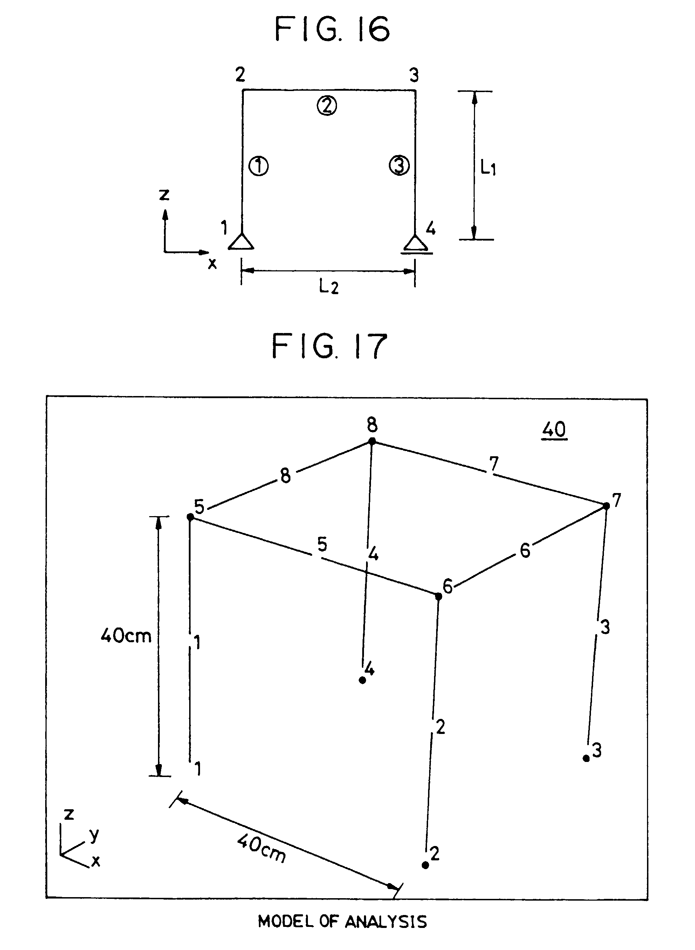

Fig. 16 is a diagram showing an example of a gate-shaped framework, in which numerals 1 to 4 represent nodes. In the example indicated in Fig. 16 similar to the static analysis, superposition is effected as indicated by Equation

(45):

$$
\begin{bmatrix}
[C^1 S^1(0)] & 0 & 0 \\
[C^1(l_1)] & -[C^2(0)] & 0 \\
[S^1(l_1)] & -[S^2(0)] & 0 \\
0 & [C^2(l_2)] & -[C^3(0)] \\
0 & [S^2(l_2)] & -[S^3(0)] \\
0 & 0 & [C^3 S^3(l_3)]
\end{bmatrix}
\begin{Bmatrix} \{a^1\} \\ \{a^2\} \\ \{a^3\} \end{Bmatrix}
=
\begin{bmatrix}
[\bar{M}^1(0)] & 0 & 0 \\
0 & 0 & 0 \\
[M^1(l_1)] & [M^2(0)] & 0 \\
0 & 0 & 0 \\
0 & [M^2(l_2)] & [M^3(0)] \\
0 & 0 & [\bar{M}^3(l_3)]
\end{bmatrix}
\begin{Bmatrix} \{\bar{a}^1\} \\ \{\bar{a}^2\} \\ \{\bar{a}^3\} \end{Bmatrix}
\qquad (45)
$$

in which [M̄] is a part of [M] (only lines corresponding to the mechanical boundary conditions). Decomposing Equation (45) in eigen vibration modes and representing it in a form of a standard eigen value problem,

$$
\begin{bmatrix}
[C^1 S^1(0)] & 0 & 0 \\
[C^1(l_1)] & -[C^2(0)] & 0 \\
[S^1(l_1)] & -[S^2(0)] & 0 \\
0 & [C^2(l_2)] & -[C^3(0)] \\
0 & [S^2(l_2)] & -[S^3(0)] \\
0 & 0 & [C^3 S^3(l_3)]
\end{bmatrix}^{-1}
\begin{bmatrix}
[\bar{M}^1(0)] & 0 & 0 \\
0 & 0 & 0 \\
[M^1(l_1)] & [M^2(0)] & 0 \\
0 & 0 & 0 \\
0 & [M^2(l_2)] & [M^3(0)] \\
0 & 0 & [\bar{M}^3(l_3)]
\end{bmatrix}
\begin{Bmatrix} \{\bar{a}^1\} \\ \{\bar{a}^2\} \\ \{\bar{a}^3\} \end{Bmatrix}
= -\frac{I}{\omega^2}
\begin{Bmatrix} \{\bar{a}^1\} \\ \{\bar{a}^2\} \\ \{\bar{a}^3\} \end{Bmatrix}
\qquad (46)
$$

is obtained.

Eigen vibration solutions can be obtained by solving Equation (46):

$$\nabla^2 \Psi(x, y) = 0 \qquad (47)$$

collateral boundary conditions being:

$$
\left. \begin{array}{l}
\tau_{xz}l + \tau_{yz}m = 0 \quad \text{on the boundary curve} \\[6pt]
l = \dfrac{dy}{ds} \quad , \quad m = -\dfrac{dx}{ds}
\end{array} \right\}
\qquad (48)
$$

Fig. 17 shows a model of analysis of an example, in which Equation (46) is solved by means of an electronic computer. The model represents a cubic framework 40, in which one side is 40cm long, the outer diameter of a pillar is 8mm, and the number of nodes is 8. TABLE 3 shows eigen vibration solutions obtained for the model of analysis by means of an electronic computer.

## TABLE 3

```
Total number of node    =      8
Total number of element =      8

   Elm  Iend  Jend    CDang
    1     1     5      0.0000
    2     2     6      0.0000
    3     3     7      0.0000
    4     4     8      0.0000
    5     5     6      0.0000
    6     6     7      0.0000
    7     7     8      0.0000
    8     8     5      0.0000

   Mte         E          POI
    1     0.2100E+07  0.3000E+00

   Elm   Mte       A          Ix          Iy          Iz
    1     1     0.5026E+00  0.2011E-01  0.2011E-01  0.4021E-01
    2     1     0.5026E+00  0.2011E-01  0.2011E-01  0.4021E-01
    3     1     0.5026E+00  0.2011E-01  0.2011E-01  0.4021E-01
    4     1     0.5026E+00  0.2011E-01  0.2011E-01  0.4021E-01
    5     1     0.5026E+00  0.2011E-01  0.2011E-01  0.4021E-01
    6     1     0.5026E+00  0.2011E-01  0.2011E-01  0.4021E-01
    7     1     0.5026E+00  0.2011E-01  0.2011E-01  0.4021E-01
    8     1     0.5026E+00  0.2011E-01  0.2011E-01  0.4021E-01

   Nod       x           y           z        Cu Cv Cw Cx Cy Cz
    1     0.0000E+00  0.0000E+00  0.0000E+00   1  1  1  1  1  1
    2     0.4000E+02  0.0000E+00  0.0000E+00   1  1  1  1  1  1
    3     0.4000E+02  0.4000E+02  0.0000E+00   1  1  1  1  1  1
    4     0.0000E+00  0.4000E+02  0.0000E+00   1  1  1  1  1  1
    5     0.0000E+00  0.0000E+00  0.4000E+02   0  0  0  0  0  0
    6     0.4000E+02  0.0000E+00  0.4000E+02   0  0  0  0  0  0
    7     0.4000E+02  0.4000E+02  0.4000E+02   0  0  0  0  0  0
    8     0.0000E+00  0.4000E+02  0.4000E+02   0  0  0  0  0  0

Number of Eigen Frequency =      5

   Mte       Gamma
    1     0.7860E-02

Number of Lumped Mass =      0

   *** Eigen frequency ***

  Mode     Omega       Frequency      Period
    1     0.5155E+01  0.8205E+00   0.1219E+01
    2     0.5155E+01  0.8205E+00   0.1219E+01
    3     0.6588E+01  0.1048E+01   0.9538E+00
    4     0.1133E+02  0.1804E+01   0.5545E+00
    5     0.2442E+02  0.3887E+01   0.2573E+00
```

<Embodiment 3-1> Application example to torsion analysis of an elastic bar (1)

In the present embodiment, the present invention is applied to torsion analysis of a bar having a square cross section, equations are deduced on the basis of the Saint Venant' s torsion theory, corresponding programs are prepared on the basis of the basic procedure according to the present invention indicated in Fig. 3 (more concretely speaking, flow chart indicated in Fig. 6), and a series of numerical calculations are carried out by means of an electronic computer.

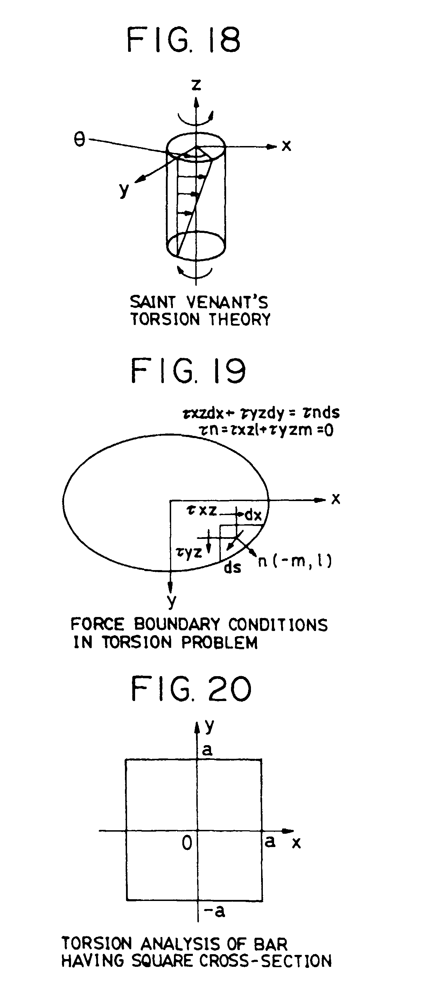

Fig. 18 is a diagram showing a model of the elastic bar used in the calculations by the Saint Venant' s torsion theory and Fig. 19 is a diagram showing force boundary conditions in the torsion problem. Representing a distorsion function of a cross section by a vector function $\Psi(x,y)$, the Saint Venant's torsion theory is after all analysis of a boundary problem of Laplace's equations given by Equation (47) with respect to $\Psi(x,y)$.

Further torsion moments $M_t$ are given as indicated by Equation (49):

$$M_t = \iint_D \left(\tau_{yz}x - \tau_{xz}y\right)dxdy = GK\theta \qquad (49)$$

where K given by

$$K = \iint_D \left(x^2 + y^2 + x\frac{\partial\Psi}{\partial y} - y\frac{\partial\Psi}{\partial x}\right)dxdy \qquad (50)$$

represents a torsion rigidity of an elastic body.

Fig. 20 is a diagram showing a cross section of a bar having a square cross section, one side of which is 2a long. Further it is supposed that the origin is at the center of the square.

In this case, a problem given in the analysis by the Saint Venant's torsion theory can be formalized as follows:

$$\left.\begin{array}{l} \nabla\Psi(x,y) = 0 \quad \text{in} \quad D \quad D: \quad -a \leq x \leq a \\ \qquad\qquad\qquad\qquad\qquad\qquad -a \leq y \leq a \\ \text{collateral conditions} \\ x = \pm a : \tau_{xz}(\pm a, y) = \dfrac{\partial\Psi}{\partial x} - y = 0 \\ y = \pm a : \tau_{yz}(x, \pm a) = \dfrac{\partial\Psi}{\partial y} + x = 0 \end{array}\right\} \qquad (51)$$

Here, putting

$$\Psi(x,y) = c_1\left(x^3 y - xy^3\right) + c_2\left(x^7 y - 7x^5 y^3 + 7x^3 y^5 - xy^7\right) + \cdots\cdots \quad (52)$$

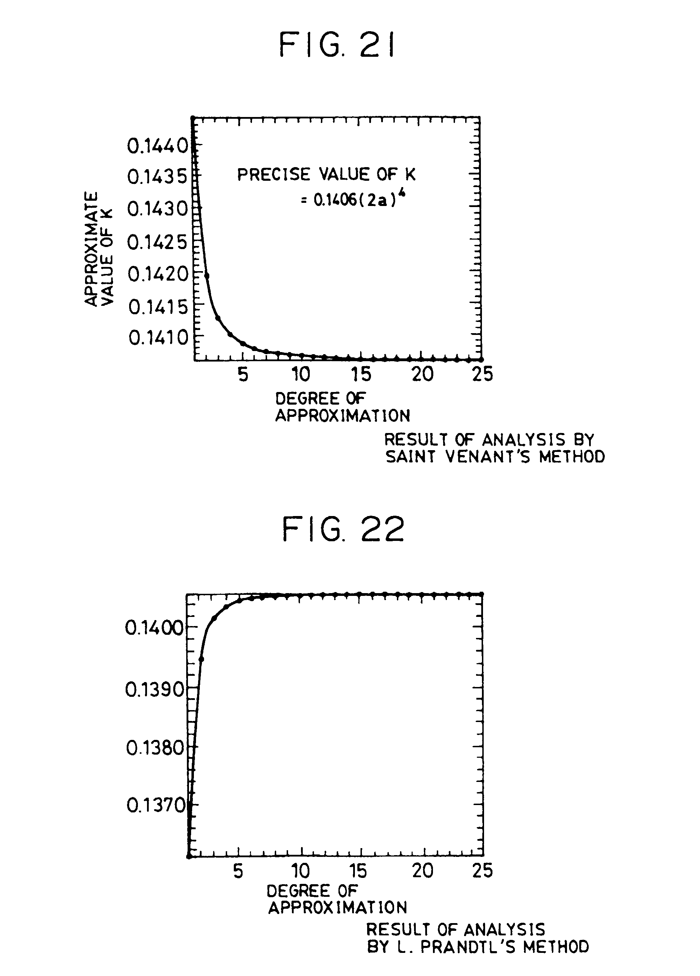

since $\Psi(x,y)$ is a two-dimensional harmonic function, it is sufficient to obtain undetermined coefficients satisfying the collateral conditions step by step. Results thus obtained are indicated by K values in TABLE 4 and a graph in Fig. 21.

Table 4

| DEGREE OF APPROXIMATION | APPROXIMATE SOLUTION x $(2a)^4$ |
|:---:|:---:|
| 1 | 0.14444 |
| 2 | 0.14195 |
| 3 | 0.14127 |
| 4 | 0.14099 |
| 5 | 0.14085 |
| 6 | 0.14077 |
| 7 | 0.14072 |

Table 4  (continued)

| DEGREE OF APPROXIMATION | APPROXIMATE SOLUTION x $(2a)^4$ |
|---|---|
| 8 | 0.14069 |
| 9 | 0.14066 |
| 10 | 0.14065 |
| 11 | 0.14063 |
| 12 | 0.14063 |
| 13 | 0.14062 |
| 14 | 0.14061 |
| 15 | 0.14061 |
| 16 | 0.14060 |
| 17 | 0.14060 |
| 18 | 0.14060 |
| 19 | 0.14060 |
| 20 | 0.14059 |
| 21 | 0.14059 |
| 22 | 0.14059 |
| 23 | 0.14059 |
| 24 | 0.14058 |
| 25 | 0.14058 |

TABLE 4 shows calculation results of the K value on the basis of the analyzing method according to the present invention, in which the number of approximating calculations by the iteration method and values corresponding thereto are indicated. In Fig. 21, they are indicated in a graph, in which the ordinate indicates the approximate value of K and the abscissa the degree of approximation (number of approximating calculations).

Since the precise solution of K is (K=0.1406$(2a)^2$ (by Timoshenko: Theory of Elasticity), it is shown that the K values obtained by the analyzing method according to the present invention become closer and closer to the precise solution.

<Embodiment 3-2> Application example to Torsion analysis of an elastic bar (2)

In the present embodiment, equations are deduced on the basis of the L. Prandtl' s membrane analogy for torsion analysis of a bar having a square cross section, corresponding programs are prepared on the basis of the basic procedure according to the present invention indicated in Fig. 3 (more concretely speaking, flowchart indicated in Fig. 6), and a series of numerical calculations are carried out by means of an electronic computer.

If a force function (vector function) Φ (x,y) as represented by

$$\tau_{xz} = \frac{\partial \Phi}{\partial y}, \ \tau_{yz} = -\frac{\partial \Phi}{\partial x} \tag{53}$$

is introduced, a torsion problem of an elastic bar is mathematically equivalent to a distorsion problem of a membrane, to which uniformly distributed load is applied, as represented by Equation (53) (L. Prandt1' s membrane analogy):

$$\left. \begin{array}{l} \nabla^2 \Phi = -2\,G\theta \\ \Phi(x,y) = \text{const} \quad \text{on} \quad \text{the boundary curve } C \end{array} \right\} \tag{54}$$

collateral conditions:

and in this case

$$M_t = \iint_D \left(\tau_{yz}x - \tau_{xz}y\right)dxdy = -\iint_D \left(\frac{\partial\Phi}{\partial x}x + \frac{\partial\Phi}{\partial y}y\right)dxdy = 2\iint_D \Phi\,dxdy \qquad (55)$$

can be obtained.

That is, according to the membrane analogy, a problem of determining a torsion force function $\Phi(x,y)$ of a bar having a square cross section is equivalent to a boundary value problem (Equation (52)) on flexion $\omega(x,y)$ of a square membrane, to which uniformly distributed load is applied:

$$\left.\begin{array}{l} \nabla^2\omega(x,\,y)=f, \quad f = 2G\theta = const \\ \text{collateral conditions:} \\ \qquad x = \pm a \qquad \omega(\pm a,\,y) = 0 \\ \qquad y = \pm a \qquad \omega(x,\pm a) = 0 \end{array}\right\} \qquad (56)$$

By the general method for obtaining solutions as described above, putting

$$\omega(x,y)=\omega_g(x,y)+\omega_p(x,y) \qquad (57)$$

$$\nabla^2\omega_p(x,y)=f \qquad (58)$$

$$\nabla^2\omega_g(x,y)=0 \qquad (59)$$

$$\omega_p(x,y) = \frac{1}{4}f\left(x^2+y^2\right) \qquad (60)$$

is obtained. Here, taking symmetricity with respect to two axes of flexion of a membrane into account, $\omega g(x,y)$ is given as indicated by Equation (61):

$$\omega_g(x,y) = a_0 + a_1\left(x^4 - 6x^2y^2 + y^4\right) + a_2\left(x^8 - 28x^6y^2 + 70x^4y^2 - 28x^2y^6 + y^8\right) + \cdots\cdots \quad (61)$$

Here, taking environmental conditions in the circumference into account, since $\omega(x,y)$ is symmetric with respect to two axes, it is sufficient to determine an successively approximately so that coefficients of terms of 0th, 1st, 2nd, ... order are zero, $\omega(\pm a,y)=0$ being an identical equation of y. Results thus obtained are indicated as K values in TABLE 5 and by a graph in Fig. 22.

Table 5

| DEGREE OF APPROXIMATION | APPROXIMATE SOLUTION x $(2a)^4$ |
|---|---|
| 1 | 0.13611 |
| 2 | 0.13947 |
| 3 | 0.14014 |
| 4 | 0.14036 |

Table 5   (continued)

| DEGREE OF APPROXIMATION | APPROXIMATE SOLUTION x $(2a)^4$ |
|---|---|
| 5 | 0.14045 |
| 6 | 0.14050 |
| 7 | 0.14052 |
| 8 | 0.14054 |
| 9 | 0.14055 |
| 10 | 0.14056 |
| 11 | 0.14056 |
| 12 | 0.14056 |
| 13 | 0.14057 |
| 14 | 0.14057 |
| 15 | 0.14057 |
| 16 | 0.14057 |
| 17 | 0.14057 |
| 18 | 0.14057 |
| 19 | 0.14057 |
| 20 | 0.14057 |
| 21 | 0.14057 |
| 22 | 0.14057 |
| 23 | 0.14058 |
| 24 | 0. 14058 |
| 25 | 0.14058 |

TABLE 5 shows calculation results obtained by the method according to the present invention. Corresponding programs are prepared on the basis of the consideration described above and the degree of approximation (number of terms) obtained by the iteration method using an electronic computer and values corresponding thereto are indicated in the table and by a graph in Fig. 22.

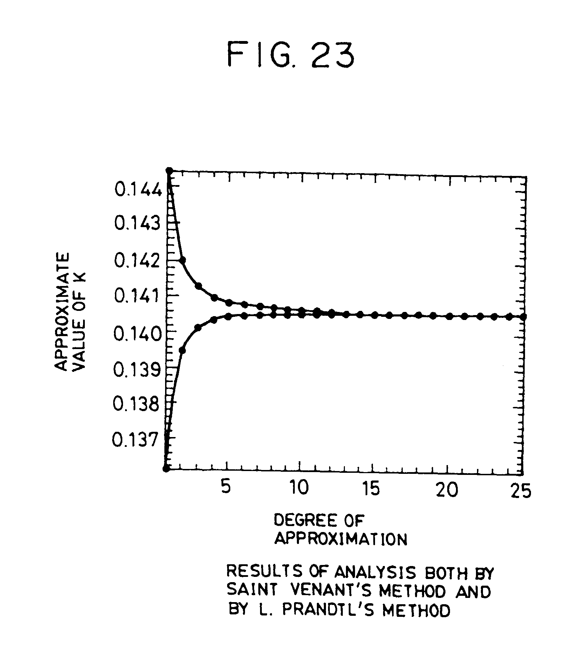

Fig. 23 is a diagram showing convergence of the solutions, which are calculation results in Embodiments 3-1 and 3-2. Such a convergence of the approximate solutions obtained by the numerical analyzing method according to the present invention with respect to the precise solution cannot be obtained by prior art analyzing methods on the basis of the finite difference method and the finite element method. Usefulness of the present invention was confirmed also here in a concrete application example.

Although the new numerical analyzing method, which is completely different from the collocation method such as the prior art finite difference or finite element method, has been explained in several embodiments in the above, taking fundamental problems of linear solid body mechanics as examples, the present invention is not restricted to solving problems of linear solid body mechanics, but it can be applied also to linear programmings (LP: linear planning method). Further it can be applied also to analysis of eigenvalue, non-stationary and non-linear problems. Moreover it can be applied to problems of analysis of so-called transport phenomena such as flow analysis, heat conduction, diffusion, electromagnetic field analysis, etc.

As clearly seen from the above description, according to the present invention relating to a numerical analyzing method by means of an electronic computer, it is possible to obtain continuously state vectors at arbitrary points between different elements in domains P, into which a defined domain is decomposed, without any restriction on granularity as required in the prior art techniques, on phenomena as described above, which can be simulated by partial differential equations, by using parallel electronic computer consisting of a plurality of processors or a plurality of electronic computers connected through a communication network with each other. However, if a processing apparatus for numerical analysis exclusively used for obtaining continuously state vectors between different elements in the domains P obtained by decomposition is developed, it can be expected to obtain results in a simpler manner.

The present invention has been made on the basis of the problem to be solved as described above and an object thereof is to provide a numerical analysis processing apparatus capable of solving equations of different elements of phenomena represented by partial differential equations independently from each other without any restriction on granularity and element analyzing blocks serving as basis therefor.

In order to achieve the above object, the invention has been led to conceive newly an idea of an electronic computer for analyzing linear and non-linear problems represented by partial differential equations on the basis of following considerations.

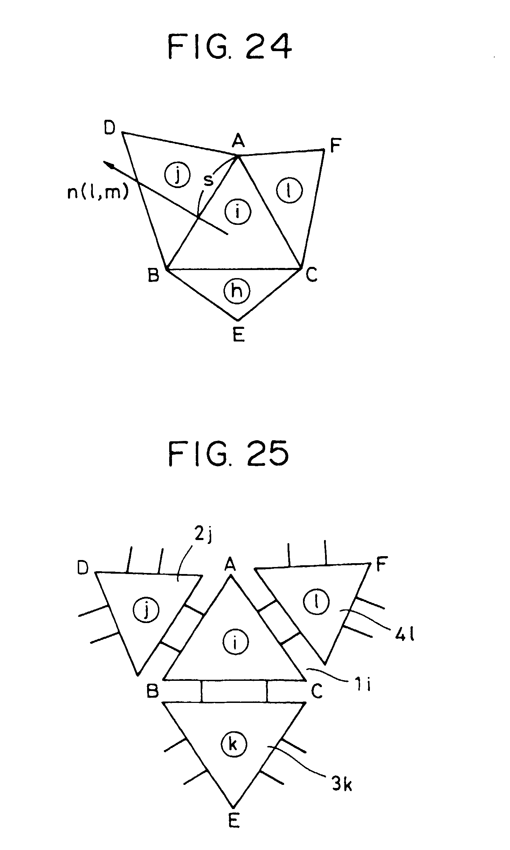

Fig. 25 is a diagram for explaining background of the numerical analyzing apparatus according to the present invention. It will be explained below, taking a case where the analyzing method according to the present invention described heretofore is applied to a problem of force field on a two-dimensional plane as an example.

In the case of a displacement force field, a fundamental equation is given by Equation (62):

$$\sum_q \oint_{c\circ i} \{(Xi - Xj)\delta ui + (Yi - Yj)\delta \sigma i\}ds = 0 \qquad (62)$$

where X=σxℓ+τxym, Y=τxyℓ+σym.

Fig. 24 is a diagram showing a representative element (domain obtained by decomposition) i in a set of finite elements (defined domain) and three elements j, k and ℓ adjacent thereto.

In Equation (62), $(X_i, Y_i)$ are boundary force vectors on a boundary side of an element i, while (U,V) are displacement vectors at an arbitrary point.

Here a displacement vector function U(x,y) is represented by Equation (63):

$$U^{(e)}(x,y)=H_1(x,y)\alpha^{(e)}+H_2(x,\beta)\beta^{(e)} \qquad (63)$$

where (e) indicates an element; $H_i$ (i=1,2) is a shape function matrix; $\alpha_i$ represents undetermined coefficients; and $\beta_i$ known external force vectors.

Strain and force matrices are calculated by using Equation (63) and boundary force vectors on each side of Δ ABC (element i) in Fig. 24

$$T^T = \llcorner \ X,Y \ \lrcorner \qquad (64)$$

are calculated. Transforming them in s parameter on each side,

$$\left. \begin{aligned} u(s) &= A_1 + A_2 S + A_3 S^2 + A_4 S^3 + A_5 S^4 + A_6 S^5 + \cdots \\ \sigma(s) &= B_1 + B_2 S + B_3 S^2 + B_4 S^3 + B_5 S^4 + B_6 S^5 + \cdots \end{aligned} \right\} \qquad (65)$$

$$\left. \begin{aligned} X(s) &= C_1 + C_2 S + C_3 S^2 + C_4 S^3 + C_5 S^4 + \cdots \\ Y(s) &= D_1 + D_2 S + C_3 S^2 + D_4 S^3 + D_5 S^4 + \cdots \end{aligned} \right\} \qquad (66)$$

are obtained, where $A_k=A_k(\alpha_i)$, $B_k=B_k(\alpha_i)$, $C_k=C_k(\alpha_i)$ and $D_k=D_k(\alpha_i)$.

Rewriting Equation (62) by using Equations (65) and (66), following Equation (67) is calculated:

$$\sum_q \oint_{c\circ i} \left\{ (Xi - Xj)\left(\frac{\partial A_1}{\partial \alpha_k} + \frac{\partial A_2}{\partial \alpha_k}s + \cdots \right) \right. \\ \left. + (Yi - Yj)\left(\frac{\partial B_1}{\partial \alpha_k} + \frac{\partial B_2}{\partial \alpha_k}s + \cdots \right) \right\} ds = 0 \qquad (67)$$

In this way, finally matrices given by following Equation (68) are obtained for every element i, j, k and $\ell$:

$$G_i\alpha_i + G_j\alpha_j + G_k\alpha_k + G_l\alpha_l + K = 0 \qquad (68)$$

Since $G_{i-1}$ can be eliminated from Equation (68), Equation (68) can be rewritten as follows:

$$\alpha_i = P\alpha_j + Q\alpha_k + R\alpha_l + S \qquad (69)$$

Equation (69) is an equation representing relations between undetermined coefficients of an element i and three elements j, k and $\ell$ adjacent thereto and this means that the undetermined coefficients can be obtained for every element independently from each other. In addition, it has a form most suitable for solving simultaneous first order equations by the iteration method represented by the Jacobi' s method or the Gauss-Seidel' s method.

Consequently it is possible to effect analysis linear and non-linear problems represented by partial differential equations without any restriction on granularity by making processors so designed that multiplication and addition operations of matrices given by Equation (69) can be carried out, corresponding to a relevant process, e.g. microcomputer chip, and by allocating microcomputer chips 1i, 2j, 3k, 4$\ell$ , ... to the different elements i, j, k, $\ell$, ...., respectively, as indicated in Fig. 25 and constructing a computer exclusively used therefor connected so as to exchange information (intermediate values) with each other.

The apparatus according to the present invention can be summarized as following concrete constructions.

An example of the element analyzing blocks according to the present invention is characterized in that it comprises a processor; a memory; in/output sections for transmission and reception of data disposed so as to correspond to a plurality of element analyzing blocks in order to make it possible to transmit/receive data to/from another plurality of element analyzing blocks; and an in/output section, which transmits/receives initial values, calculation results and control data to/from a control section.

Further another example of the element analyzing blocks according to the present invention is characterized in that it comprises a processor; a memory; three in/output sections for transmission and reception of data, which make it possible to transmit/receive data to/from three other element analyzing blocks; and an in/output section, which transmits/receives initial values, calculation results and control data to/from a control section.

An example of element analyzing blocks for three-dimensional analysis according to the present invention is characterized in that it comprises a processor; a memory; at least four in/output sections for transmission and reception of data, which make it possible to transmit/receive data to/from at least four other element analyzing blocks; and an in/output section, which transmits/receives initial values, calculation results and control data to/from a control section.

Further an example of the numerical analysis processing apparatus according to the present invention is characterized in that it comprises an analyzing section consisting of different element analyzing blocks described above of the present invention and a control section, which gives the different analyzing blocks initial values and at the same time controls operation of the analyzing section.

Another example of the numerical analysis processing apparatus according to the present invention is characterized in that it comprises a plurality of substructures, in which a finite number of element analyzing blocks of the present invention are coupled with each other; an analyzing section connecting the plurality of substructures so that they can transmit/receive data mutually; and a control section, which gives different substructures initial values and at the same time controls operation of the analyzing section so as to obtain equilibrium solutions between the different substructures by the direct solving method.

<Numerical analyzing apparatus for analyzing two-dimensional problems>

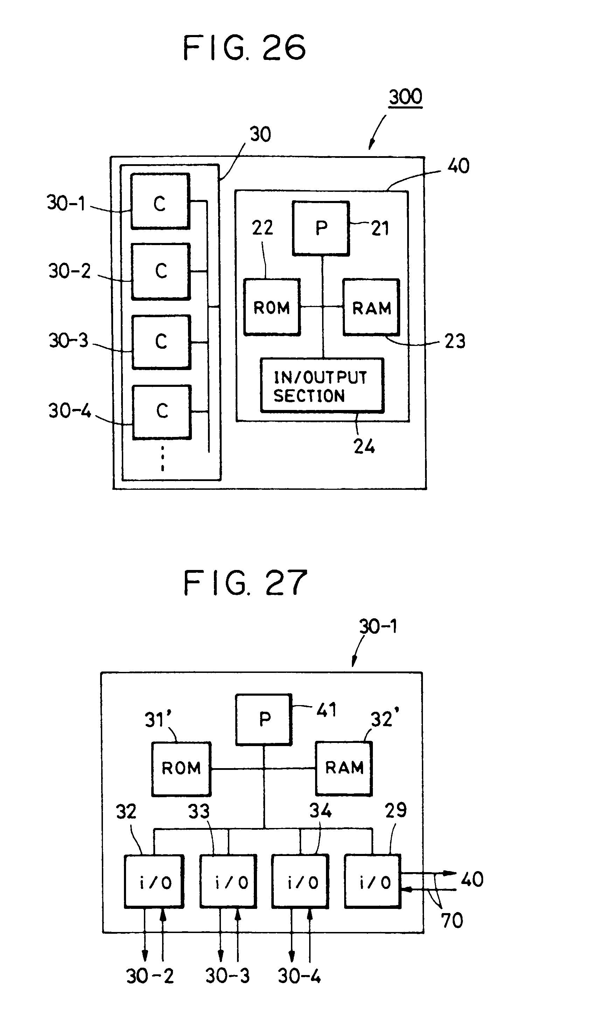

Fig. 26 is a block diagram showing a construction example of the numerical analysis processing apparatus according to the present invention for explaining a numerical analyzing apparatus constructed for analyzing two-dimensional problem.

A numerical analysis processing apparatus 300 comprises an analyzing section 30 consisting a plurality of analyzing blocks 30-1, 30-2, 30-3, 30-4, .... and a control section 40, which processes results obtained by the analyzing section 30 to obtain approximate solutions.

Each of the analyzing blocks includes a processor 41; three I/O ports 32, 33 and 34 constructed so that they can be connected with three analyzing blocks corresponding to adjacent element, and an I/O port 29 for in/output, as indicated in Fig. 27.

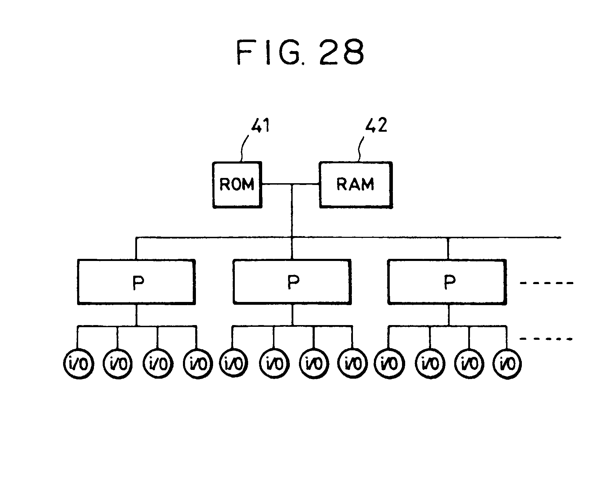

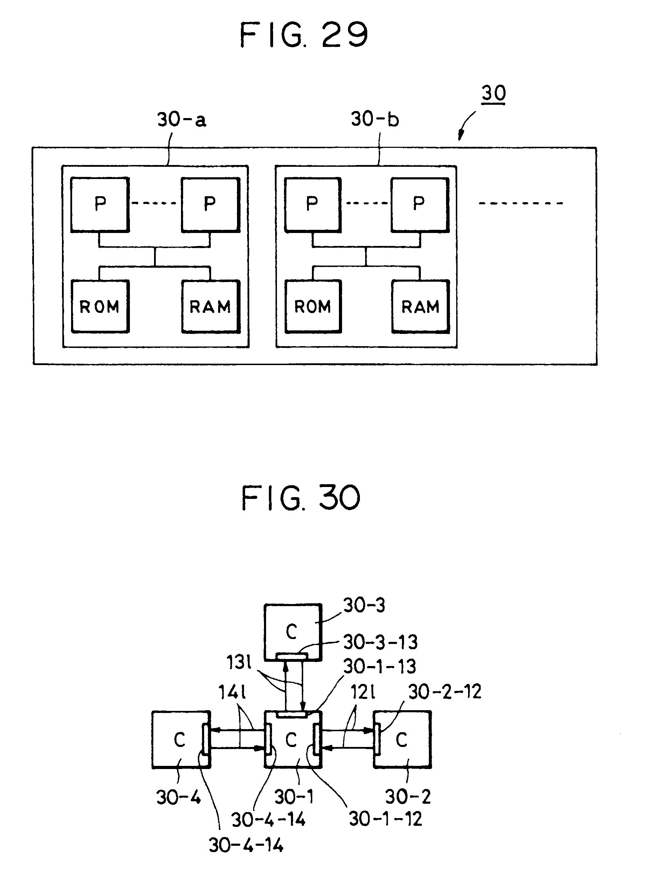

Further each of the analyzing blocks may have a program storing memory (ROM) 31' and an RAM 32' or a register exclusively used for analyzing calculation, as indicated in Fig. 27, or they may have an ROM 41 and an RAM 42 used in common, as indicated in Fig. 28. Further an ROM for storing programs and an RAM are disposed for each of analyzing blocks 30-a, 30-b, .... to be used in common, as indicated in Fig. 29.

The I/O port for transmitting and receiving information of each of the analyzing blocks is connected with the I/O ports of other analyzing blocks through lines to transmit/receive information (intermediate values) to/from analyzing blocks corresponding to adjacent elements. For example, as indicated in Fig. 30, the analyzing block 30-1 transmits/receives information to/from an analyzing block 30-2 corresponding to an adjacent element through a line $12\ell$ connecting information transmitting/receiving I/O ports 30-1-12 and 30-2-12 with each other; it transmits/receives information to/from another analyzing block 30-3 corresponding to another adjacent element through a line $13\ell$ connecting information transmitting/receiving I/O ports 30-1-13 and 30-3-13 with each other; and it transmits/receives information to/from still another analyzing block 30-4 corresponding to still another adjacent element through a line $14\ell$ connecting information transmitting/receiving I/O ports 30-1-14 and 30-4-14 with each other.

In Fig. 26, the control section 40 includes a processor 21, an ROM 22, an RAM 23 and an in/output section 24 and is connected with the respective in/output I/O ports 29 in the analyzing section 30 through a bus 70. In this way it controls the different analyzing blocks in the analyzing section 30 and at the same time obtaining calculation results from the analyzing section 30, it calculates results of analysis of the whole system to output them. The control section 40 may be either parallel computers consisting of a plurality of processor or persocoms. Further, although only one set I/O port for exchanging information with the control section 40 is indicated in each of the analyzing blocks in the embodiment one analyzing block may includes a plurality of I/O ports.

At solving a two-dimensional problem, since the number of elements closely adjacent to a relevant element is 3, it is sufficient to construct an analyzing block so that it can exchange information with three adjacent analyzing blocks, as indicated by the explanation diagram in Fig. 30. (The number of adjacent elements can be increased as 4, 5, ..., using polygonal elements. However, since the circuit construction becomes more complicated with increasing number of adjacent elements and a two-dimensional plane can be divided into triangles in mesh, it is preferable that the number of adjacent elements is 3.) Consequently one analyzing block is so constructed that it includes one processor, three information transmitting/receiving I/O ports constructed so that they can be connected with three adjacent analyzing blocks, and one in/outputting I/O port.

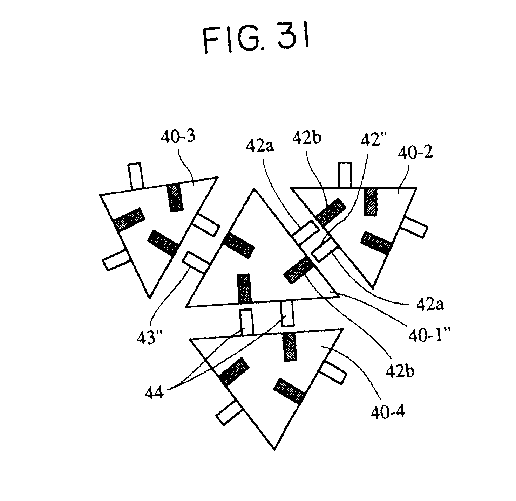

In Fig. 30, since analyzing blocks corresponding to adjacent elements are connected through lines, the different analyzing blocks can be arranged spatially arbitrarily except for restriction due to physical requirements. However, since it can be expected that efficiency of the whole apparatus increases with decreasing distance between different analyzing blocks, the analyzing blocks themselves may be triangular, as indicated in an embodiment of the analyzing blocks in Fig. 31 and at the same time the information transmitting/receiving I/O ports may be so constructed that they can be coupled by insertion with each other.

In Fig. 31, terminal sections 42, 43, 44 of the I/O ports are disposed at the centers of the sides of analyzing blocks 40-1, 40-2, 40-3, 40-4, ...., respectively. If one 42a of the terminals of each of the terminal sections (e.g. output terminal) is of male type (protrusion), while the other 42b (input terminal) is of female type (hollow), the output terminal 42a of the analyzing block 40-1 is inserted into the input terminal 42b of the analyzing block 40-2, while the output terminal 42a of the analyzing block 40-2 is inserted into the input terminal 42b of the analyzing block 40-1. In the same way, the analyzing blocks 40-3, 40-4, ...., 40-(3n-1) can be coupled with each other so as to construct the analyzing section 40 of the numerical analyzing apparatus capable of analyzing n elements.

Further the information transmitting/receiving I/O ports must not be constructed so as to be of insertion type, but the analyzing section may be constructed at fabrication so as to be a set of finite elements, in which analyzing blocks are closely connected with each other (e.g. by using integrated circuit techniques).

<Application example to numerical analysis processing (1)>

A numerical analysis processing apparatus 300 is fabricated, which includes an analyzing section 30 composed of a set of a finite number of analyzing blocks as described above, to which a set of a finite number of elements are allocated in a manner of one-to-one correspondence, in a specified coupling state (the coupling state is not restricted to those described previously), and a control section 40.

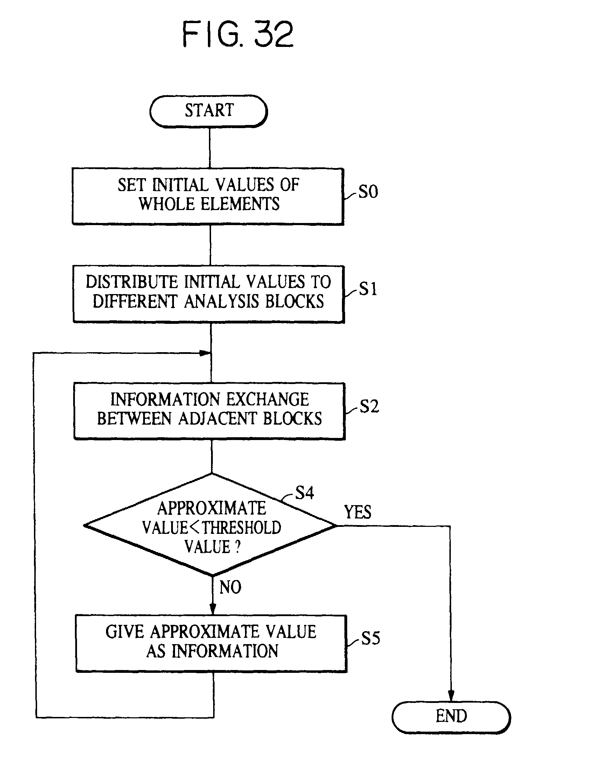

Then, as indicated in the flowchart in Fig. 32, initial values are assumed for all the elements (SO) and this information is given to the different analyzing blocks through the in/output section 24 of the control section 20, the bus 70 and the in/output I/O ports thereof (S1).

The different analyzing blocks exchange the given information with adjacent analyzing blocks (S2). Calculating the right member of Equation (69) mentioned previously, it is possible to obtain the first approximation term of the undetermined coefficient $\alpha_i$. The program for calculating the right member of Equation (69) is stored previously in the ROM for programs so that the numerical analysis processing apparatus 300 is in a state where the program can be immediately executed at starting.

The degree of approximation for the calculation is increased by repeating such an exchange-calculation operation and this iteration calculation is interrupted at a point of time, where a value A obtained by the calculation is within a predetermined extent of errors ($|A_j-A_j-_1| < \varepsilon$ ($\varepsilon$ being a threshold value)) (S4).

In case where the value A obtained by the calculation cannot be within the predetermined extent of errors in the step S4, the approximate value is replaced as information and exchanged between analyzing blocks adjacent to each other. The right member of Equation (69) is again calculated and the procedure returns to S2 in order to obtain an approximate value of a succeeding term (S5).

The application example to the numerical analysis processing is an example of application to a simulator, in which analyzing blocks, each of which corresponds to an element unit, are combined to be coupled and parallel calculations of a set of finite number of elements having a large degree of freedom is effected. A torsion problem of a bar having a square cross section was solved by the iteration method according to the membrane analogy although it was of small scale and satisfactory results were obtained.

<Application example of numerical analysis processing (2)>

As a more practical application example than that described above, another method can be cited, in which substructures, which is so called by the finite element method using a finite number of analyzing blocks coupled with each other, are formed, the substructures being connected through I/O lines with each other similarly to those described previously, and equilibrium solutions between the different substructures are obtained by the direct method by giving initial values on boundaries between different elements adjacent to each other (refers to Fig. 29). For example, the numerical analysis processing apparatus can be so constructed that it comprises substructures, in which a finite number of analyzing blocks are coupled with each other; an analyzing section, in which a plurality of substructures are connected so that data can be transmitted/received therebetween; and a control section, which gives the different substructures initial values and at the same time controls operations of the analyzing section so as to obtain equilibrium solutions between the different substructures by the direct solving method.

By the simulator, in which analyzing blocks, each of which corresponds to an element unit, are combined to be coupled and parallel calculations of a set of finite number of elements having a large degree of freedom is effected, it is anticipated that there remain points to be further devised in the hardware construction at practical use from the point of view of calculation time, cost and efficiency. On the contrary, it can be pointed out that the method described above is closer to practical use at these points. More concretely speaking, it is possible to realize a parallel calculation method, by which the direct method by means of a large scale finite element system and the iteration method are combined. That is, it can be expected to overcome a problem on granularity, which is one of the most difficult problems in the parallel processing problem of large scale scientific and technological calculations at the present state.

<n-dimensional problem analyzing numerical analyzing apparatus>

At solving three-dimensional problem, the number of elements closely adjacent to a relevant element is 8 (it has eight boundary planes in a dense cubic lattice). However, supposing triangular piramids, the number of closely adjacent elements can be further reduced to 5. Therefore, in a three-dimensional numerical analysis processing apparatus, four analyzing blocks corresponding to adjacent elements are satisfactory and it can be constructed so as to include further one I/O port, which can be connected with an analyzing block adjacent to the processor, and one in/output I/O port.

Moreover the numerical analyzing blocks and the numerical analysis processing apparatus according to the present invention is not restricted to solving problems of linear solid body mechanics, but it can be applied also to liner programmings (LP: linear planning method). Further it can be applied also to analysis of eigenvalue, non-stationary and non-linear problems. Moreover it can be applied to problems of analysis of so-called transport phenomena such as flow analysis, heat conduction, diffusion, electromagnetic field analysis, etc.

Although several embodiments of the present invention have been explained in the above, the present invention is not restricted to the embodiments described above, but it is a matter of course that various modifications thereof can be realized.

As explained in the above, according to the present invention, it is possible to obtain approximate solutions of displacement undetermined coefficients of different elements and further to obtain continuously and easily state vectors at arbitrary points between different elements. New analyzing methods can be realized not only for solid body mechanics but also for linear and non-linear problems represented by partial differential equations, presuming use of electronic computers and further results, which are in good agreement with precise solutions, are obtained in the different concrete application examples. In this way usefulness thereof has been verified.

Moreover the present invention can be applied not only to solving problems of linear solid body mechanics but also to analyzing problems of so-called transport phenomena such as flow analysis, heat conduction, diffusion, electromagnetic field analysis, etc., apart from linear programmings (LP: linear planning method), analysis of eigen value, non-stationary and non-linear problems.

Moreover, by using the element analyzing blocks according to the present invention, it is possible not only to allocate the element analyzing blocks to elements obtained by decomposition in a manner of one-to-one correspondence but also to adopt a substructure composition. Therefore a high degree of freedom can be obtained at constructing the numerical analyzing apparatus.

Further, since each of the element analyzing blocks can exchange information with other blocks adjacent thereto, there is no so-called restriction on granularity.

In addition, at solving a two-dimensional problem it is possible to obtain solutions of an element by exchanging information with three elements adjacent to the relevant element and the construction of the apparatus is simple. It is possible further to supply parts of the apparatus in the form of cheap chips, which can be easily integrated. Therefore the present invention can contribute to reduction of cost for development of a large scale numerical analyzing apparatus.

By using the numerical analysis processing apparatus according to the present invention, since equations simulating phenomena represented by partial differential equations are solved, a set of a finite number of elements being in a specified coupling state, in which element analyzing blocks are allocated to elements of the set of a finite number of elements in a manner of one-to-one correspondence, it is possible to obtain approximate solutions without any restriction on granularity.

Further the numerical analysis processing apparatus according to the present invention can be applied not only to solving problems of linear solid body mechanics but also to analyzing problems of so-called transport phenomena such as flow analysis, heat conduction, diffusion, electromagnetic field analysis, etc., apart from linear programing, analysis of eigenvalue, non-stationary and non-linear problems.

In addition, it can be expected that a further practically useful numerical analysis processing apparatus can be provided by adopting a substructure composition, in which a plurality of element analyzing blocks consisting of a finite number of elements are combined with each other.

**Claims**

1. A numerical analyzing method comprising a step of decomposing a defined space into elements consisting of a finite number of small spaces for a phenomenon represented by partial differential equations;

   a step of representing state vectors within each of said small spaces by a series of functions with respect to a local coordinate system in each of said small spaces;
   a step of forming a square matrix equation for undetermined coefficients of each of said series of functions as a whole; and
   a step of obtaining approximate solutions of said square matrix equation to calculate said state vectors at an arbitrary point in said space.

2. A numerical analyzing method comprising a step of decomposing a defined space into elements consisting of a finite number of small spaces for a phenomenon represented by partial differential equations;

   a step of representing state vectors within each of said small spaces by a series of functions with respect to a local coordinate system in each of said small spaces;
   a step of regulating equations representing relationships between said undetermined coefficients of said series of functions so that said state vectors satisfy govering equations within said small spaces;
   a step of forming a square matrix equation for undetermined coefficients of each of said series of functions as a whole; and
   a step of obtaining approximate solutions of said square matrix equation to calculate said state vectors at an arbitrary point in said space.

3. A numerical analyzing method comprising a step of decomposing a defined space into elements consisting of a finite number of small spaces for a phenomenon represented by partial differential equations;

   a step of representing state vectors within each of said small spaces by a series of functions with respect to a local coordinate system in each of said small spaces;
   a step of forming equations representing relationships between said undetermined coefficients of said series of functions representing said state vectors of each of small spaces so that said state vectors of a relevant space are continuous to state vectors of spaces adjacent to said relevant space at many points on a peripheral boundary of said spaces;

a step of forming a square matrix equation for undetermined coefficients of each of said series of functions as a whole; and

a step of obtaining approximate solutions of said square matrix equation to calculate said state vectors at an arbitrary point in said space;

a step of forming equations representing relationships between said undetermined coefficients of said series of functions representing said state vectors of each of small spaces so that said state vectors of a relevant space are continuous to state vector of spaces adjacent to said relevant space at many points on a peripheral boundary of said spaces;

a step of forming a square matrix equation for undetermined coefficients of each of said series of functions as a whole; and

a step of obtaining approximate solutions of said square matrix equation to calculate said state vectors at an arbitrary point in said space.

**4.** A numerical analyzing method comprising a step of decomposing a defined space into elements consisting of a finite number of small spaces for a phenomenon represented by partial differential equations;

a step of representing state vectors within each of said small spaces by a series of functions with respect to a local coordinate system in each of said small spaces;

a step of regulating equations representing relationships between said undetermined coefficients of said series of functions so that said state vectors satisfy govering equations within said small spaces.

**5.** A numerical analyzing method comprising:

a step of formulating a non-linear problem represented by partial differential equations in an increment form with respect to input or time;

a step of decomposing a defined space into small spaces of a finite number;

a step of forming an incrimental form square matrix equation with respect to undetermined element variables of a whole system to obtain approximate solutions thereof; and

a step of calculating state vectors at an arbitrary point which vary sequentially.

**6.** A numerical analyzing method comprising:

a step of formulating a non-linear problem represented by partial differential equations in an increment form with respect to input or time;

a step of decomposing a defined space into small spaces of a finite number;

a step of forming equations representing relationships between undetermined coefficients of state vectors supposed at each of said small spaces so that said state vectors satisfy govering equations thereof;

a step of collecting said equations representing relationships of said small spaces; and

forming an incrimental form square matrix equation with respect to undetermined element variables of a whole system to obtain approximate solutions thereof; and

a step of calculating state vectors at an arbitrary point which vary sequentially.

**7.** A numerical analyzing method comprising:

a step of formulating a non-linear problem represented by partial differential equations in an increment form with respect to input or time;

a step of decomposing a defined space into small spaces of a finite number;

a step of forming equations representing relationships between undetermined coefficient of state vectors of adjacent small spaces so that state vectors supposed each of said small spaces satisfy continuity conditions at a peripheral boundary thereof at many points or planes thereof;

a step of collecting said equations representing relationship of said small spaces;

forming an incrimental form square matrix equation with respect to undetermined element variables of a whole system to obtain approximate solutions thereof; and

a step of calculating state vectors at an arbitrary point which vary sequentially.

**8.** A numerical analyzing method comprising:

a step of formulating a non-linear problem represented by partial differential equations in an increment form with respect to input or time;

a step of decomposing a defined space into small spaces of a finite number;

a step of forming equations representing relationships between undetermined coefficient of state vectors of adjacent small spaces so that state vectors supposed at each of said small spaces satisfy govering equations thereof and continuity conditions at a peripheral boundary thereof at many points or planes thereof;

a step of collecting said equations representing relationship of said small spaces;

forming an incrimental form square matrix equation with respect to undetermined element variables of a whole system to obtain approximate solutions thereof; and

a step of calculating state vectors at an arbitrary point which vary sequentially.

9. A numerical analizing method according to either one of Claims 1 to 8, wherein in case where said small spaces are in contact with external spaces, predetermined equations representing displacement boundary conditions are used.

10. A numerical analyzing method according to either one of Claims 1 to 8, wherein in case where said small domain are in contact with external spaces, predetermined equations representing force boundary conditions are used.

11. A numerical analyzing method according to Claim 1 or 2, wherein said equations representing relationships between said undetermined coefficients are formed for every element independently from each other.

12. A numerical analyzing method according to Claim 3 or 4, wherein said equations representing relationships between said undetermined coefficients make to repeat transfer and renewal of new initial values between adjacent elements when approximate equations of said square matrix equations are obtained.

13. A numerical analyzing method according to either one of Claims 1 to 12, wherein said series of functions are polynomials of finite number of terms.

14. A numerical analyzing method according to either one of Claims 1 to 12, wherein said approximate solutions are obtained by decomposing said square matrix.

15. A numerical analyzing method according to Claim 3 or 4, wherein said approximate solutions are obtained by further decomposing decomposed and allocated square matrix and using the iteration method.

16. A numerical analyzing method according to Claim 14 or 15, wherein square matrix equations obtained by decomposition are allocated to a plurality of computer devices independent from each other to be calculated.

17. A numerical analyzing method according to Claim 14 or 15, wherein square matrix equations obtained by decomposition are allocated to a plurality of computer devices connected with each other through lines or a network to be calculated.

18. Element analyzing blocks, each of which comprises a processor; a memory; in/output sections for transmission and reception of data disposed so as to correspond to a plurality of element analyzing blocks in order to make it possible to transmit/receive data to/from another plurality of element analyzing blocks; and

an in/output section, which transmits/receives initial values, calculation results and control data to/from a control section.

19. Element analyzing blocks, each of which comprises a processor; a memory; three in/output sections for transmission and reception of data, which make it possible to transmit/receive data to/from three other element analyzing blocks; and

an in/output section, which transmits/receives initial values, calculation results and control data to/from a control section.

20. Element analyzing blocks for three-dimensional analysis, each of which comprises a processor; a memory; five in/output sections for transmission and reception of data, which make it possible to transmit/receive data to/from a plurality of other element analyzing blocks; and

an in/output section, which transmits/receives initial values, calculation results and control data to/from a control section.

21. A numerical analysis processing apparatus comprising an analyzing section consisting of a plurality of element analyzing blocks defined by Claim 18, 19 or 20, and a control section, which gives the different analyzing blocks initial values and at the same time controls operation of said analyzing section.

22. A numerical analysis processing apparatus comprising a plurality of substructures in which a finite number of element analyzing blocks defined by Claim 19, 19 or 20 are coupled with each other;

an analyzing section connecting said plurality of substructures so that they can transmit/receive data mutually; and
a control section, which gives different substructures initial values and at the same time controls operation of said analyzing section so as to obtain equilibrium solutions between said substructures by the direct solving method.

# FIG. 1

# FIG. 2

# FIG. 3

START

S1
REGION DIVISION ◄----- DDM

S2
SUPPOSITION OF ELEMENT
DISPLACEMENT FIELD ◄-----
FINITE POLYNOMIAL
IN RIGHT ANGE OR
ORTHOGONAL CURVILINEAR
COORDINATE SYSTEM

S3
INTRODUCTION OF SELF
EQUILIBRIUM SOLUTION ◄----- SUBROUTINE PROGRAM

S4
DEDUCTION OF EQUATIONS
REPRESENTING CONTINUITY
CONDITIONS OF STATE
QUANTITIES ON BOUNDARY SIDES
OR SURFACES AND FORMATION
OF SQUARE MATRIX EQUATION

S5
REDUCTION OF ELEMENT MATRIX

DIRECT METHOD          REITERATION METHOD

CONSTRUCTION OF EQUATIONS
OF WHOLE AND ANALYTICAL
CALCULATION

ALLOCATION OF EQUATIONS
REPRESENTING CONTINUITY
CONDITIONS OF STATE
QUANTITIES AND PARALLEL
CALCULATIONS
S6

CALCULATION OF VECTORS
REPRESENTING STATE
QUANTITIES

CALCULATION OF VECTORS
REPRESENTING STATE
QUANTITIES
S7

END          END

# FIG. 4A

LATTICE
STRUCTURE

# FIG. 4B

MON-LATTICE
STRUCTURE

EP 0 969 396 A2

# FIG. 5

## FIG. 6

START

MESH DECOMPOSITION BY DOMAIN DECOMPOSITION METHOD — T1

OBTAIN NUMBER OF ELEMENT CLUSTERS — T2

NUMBER OF ELEMENT CLUSTERS $-1 > 0$ ? — T3
— NO → (A)
— YES ↓

INPUT ELEMENT DATA SUCH AS ELEMENT NUMBER, LOCAL COORDINATE SYSTEM, ETC. — T4

STORE DIFFERENT ELEMENT DATA — T5

PRINT OUT DIFFERENT ELEMENT DATA — T6

CALCULATE ELEMENT STATE QUANTITY VECTORS s(xi), u(xi), n(xi) — T7

TRANSFORM s(xi) TO FLOATING COORDINATES ON ELEMENT BOUNDARY SURFACE — T8

$\alpha = P\beta + Q\gamma + R\delta + S$ — T9

(A)

SET INITIAL VALUE OF BOUNDARY ELEMENT STATE VECTOR s(xi) — T10

NUMBER OF ELEMENT CLUSTERS $-1 > 0$ ? — T11
— NO →
— YES ↓

SET INITIAL VALUES OF DIFFERENT ELEMENT CLUSTERS — T12

CALCULATE SUCCESSIVE APPROXIMATE SOLUTIONS OF DIFFERENT ELEMENT CLUSTERS BY DIRECT METHOD — T13

EXCHANGE OF i-th APPROXIMATE VALUES OF ONE ELEMENT AND ANOTHER ADJACENT THERETO FOR EACH OTHER — T14

CALCULATE (i+1)th APPROXIMATE VALUE OF EACH ELENT BY REITERATION METHOD — T15

ARE EVALUATED ERRORS SMALLER THAN PREDETERMINED VALUES ? — T16
— NO →
— YES ↓

STORE APPROXIMATE SOLUTIONS OF EACH ELEMENT — T17

PRINT OUT APPROXIMATE SOLUTIONS — T18

END

# FIG. 7

# FIG. 8

Section C

Section C

Section A

10

20

20

# FIG. 9

10

A

D

E

11

B

F

C

# FIG. 10

DISTRIBUTION
OF FLEXION w

A
B
C
D
A(Analytical)
B(Analytical)
C(Analytical)
D(Analytical)

# FIG. 11

DISTRIBUTION OF
INCLINATION ANGLE $\frac{\partial w}{\partial n}$

A[ 0]
A[45]
A[90]
A[135]
A[ 0](Anly)
A[45](Anly)
A[90](Anly)
A[135](Anly)

# FIG. 12

DISTRIBUTION OF
BENDING MOMENT Mn′

# FIG. 13

DISTRIBUTION OF
SHEARING FORCE Qn

FIG. 14A

FIG. 14B

$E = 2100000 \, Kg^2$
$A = 0.50265 cm^2$
$Itt = 0.020106 cm^2$
$K = 0.040212 cm^2$

# FIG. 15A

DISTRIBUTION OF
SHEARING FORCE $Q_x$

# FIG. 15B

DISTRIBUTION OF
SHEARING FORCE $Q_y$

# FIG. 15C

DISTRIBUTION OF
AXIAL FORCE N

# FIG. 15D

DISTRIBUTION OF
TORSION MOMENT $M_z$

# FIG. 15E

DISTRIBUTION OF
BENDING MOMENT $M_x$

# FIG. 15F

DISTRIBUTION OF
BENDING MOMENT $M_y$

# FIG. 16

# FIG. 17

MODEL OF ANALYSIS

# FIG. 18

SAINT VENANT'S
TORSION THEORY

# FIG. 19

$$\tau xz dx + \tau yz dy = \tau n ds$$
$$\tau n = \tau xz l + \tau yz m = 0$$

FORCE BOUNDARY CONDITIONS
IN TORSION PROBLEM

# FIG. 20

TORSION ANALYSIS OF BAR
HAVING SQUARE CROSS-SECTION

EP 0 969 396 A2

# FIG. 21

PRECISE VALUE OF K

$= 0.1406 (2a)^4$

APPROXIMATE VALUE OF K

DEGREE OF APPROXIMATION

RESULT OF ANALYSIS BY SAINT VENANT'S METHOD

# FIG. 22

DEGREE OF APPROXIMATION

RESULT OF ANALYSIS BY L. PRANDTL'S METHOD

48

# FIG. 23

RESULTS OF ANALYSIS BOTH BY
SAINT VENANT'S METHOD AND
BY L. PRANDTL'S METHOD

# FIG. 24

# FIG. 25

# FIG. 26

# FIG. 27

# FIG. 28

# FIG. 29

# FIG. 30

# FIG. 31

# FIG. 32

START

SET INITIAL VALUES OF
WHOLE ELEMENTS — S0

DISTRIBUTE INITIAL VALUES TO
DIFFERENT ANALYSIS BLOCKS — S1

INFORMATION EXCHANGE
BETWEEN ADJACENT BLOCKS — S2

APPROXIMATE
VALUE < THRESHOLD
VALUE ? — S4   YES

NO

GIVE APPROXIMATE VALUE
AS INFORMATION — S5

END